# EUROPEAN PATENT APPLICATION

(11) **EP 3 920 462 A1**
(43) Date of publication of application: **08.12.2021**
(21) Application number: 20784835.9
(22) Date of filing: 27.01.2020
(51) Int. Cl.: H04L 9/08, G06F 21/60

(54) **INFORMATION PROCESSING SYSTEM, INFORMATION PROCESSING METHOD, AND PROGRAM**

(30) Priority: 29.03.2019 JP 2019065928
(71) Applicant: KOBELCO CONSTRUCTION MACHINERY CO., LTD., Hiroshima-shi Hiroshima 731-5161 (JP)
(72) Inventor: HAMAMOTO, Ryo, Hiroshima-shi, Hiroshima 731-5161 (JP); ENDO, Kazuomi, Hiroshima-shi, Hiroshima 731-5161 (JP); TSURUDA, Jun, Hiroshima-shi, Hiroshima 731-5161 (JP); OKAZAKI, Yuta, Hiroshima-shi, Hiroshima 731-5161 (JP)
(74) Representative: TBK
(86) International application number: PCT/JP2020/002754
(87) International publication number: WO 2020/202739

(57) **Abstract**

An information processing system (1) includes a sensor (70) and a key information generator (61). The sensor (70) is provided in a working machine (40), the key information generator (61) is provided in the working machine (40) and generates key information (K) based on a sensor value received from the sensor (70). The key information (K) is used to transmit and receive information between the working machine (40) and an external device (10) provided outside the working machine (40).

## Description

### Technical field

The present invention relates to an information processing system, an information processing method, and a program for use in transmitting and receiving information between a working machine and an external device.

### Background Art

For example, Patent Literature 1 describes a technique for transmitting and receiving information between a working machine and an external device provided outside the working machine.

The technique described in Patent Literature 1 may fail to take security measures against the information transmitted and received between the external device and the working machine. Even if taking any security measures against the information transmitted and received between the external device and the working machine, the technique requires key information. However, the working machine cannot easily generate the key information. For example, providing a random number generation device that generates the key information in a working machine may involve high costs. In addition, a controller (computer) mounted on a working machine may lack a processing capability suitable to generate the key information.

### Citation List

### Patent Literature

Patent Literature 1: JP 2007-332563 A

### Summary of Invention

In consideration of the above, the present invention aims to provide an information processing system, an information processing method, and a program, all of which enable a working machine to easily generate key information.

According to an aspect of the present invention, an information processing system includes a sensor and a key information generator. The sensor is provided in a working machine. The key information generator is provided in the working machine and generates key information based on one or more sensor values received from the sensor. The key information is used to transmit and receive information between the working machine and an external device provided outside the working machine.

According to another aspect of the present invention, an information processing method includes the step of generating key information based on a sensor value received from a sensor provided in a working machine. The key information is used to transmit and receive information between the working machine and an external device provided outside the working machine.

According to still another aspect of the present invention, a program causes a computer to perform the step of generating key information based on a sensor value received from a sensor provided in a working machine. The key information is used to transmit and receive information between the working machine and an external device provided outside the working machine.

### Brief Description of Drawings

FIG. 1 is a block diagram of an information processing system 1 according to a first embodiment.
FIG. 2 is a side view of a working machine 40 illustrated in FIG. 1.
FIG. 3 is a diagram illustrating a sensor 70, a key information generator 61, and other components illustrated in FIG. 1.
FIG. 4 is a sequence diagram of a key information generation phase in the information processing system 1 illustrated in FIG. 1.
FIG. 5 is a sequence diagram of an encryption/decryption phase in the information processing system 1 illustrated in FIG. 1.
FIG. 6 is a flowchart of a key information generation phase in an external device 10 illustrated in FIG. 1.
FIG. 7 is a flowchart of the key information generation phase of the working machine 40 illustrated in FIG. 1.
FIG. 8 is a flowchart of an encryption/decryption phase in the external device 10 illustrated in FIG. 1.
FIG. 9 is a flowchart of an encryption/decryption phase in the working machine 40 illustrated in FIG. 1.
FIG. 10 is a block diagram of an information processing system 201 according to a second embodiment.
FIG. 11 is a sequence diagram of an encryption/decryption phase in the information processing system 201 illustrated in FIG. 10.
FIG. 12 is a block diagram of an information processing system 301 according to a third embodiment.
FIG. 13 is a sequence diagram in a manipulation detection phase in the information processing system 301 illustrated in FIG. 12.
FIG. 14 is a flowchart of the manipulation detection phase in an external device 10 illustrated in FIG. 12.
FIG. 15 is a flowchart of the manipulation detection phase in a working machine 40 illustrated in FIG. 12.
FIG. 16 is a block diagram of an information processing system 401 according to a fourth embodiment.
FIG. 17 is a sequence diagram of a manipulation detection phase in the information processing system 401 illustrated in FIG. 16.
FIG. 18 is a block diagram of an information processing system 501 according to a fifth embodiment.
FIG. 19 is a sequence diagram of a user authentication phase in the information processing system 501 illustrated in FIG. 18.
FIG. 20 is a flowchart of the user authentication phase in an external device 10 illustrated in FIG. 18.
FIG. 21 is a flowchart of the user authentication phase in a working machine 40 illustrated in FIG. 18.
FIG. 22 is a block diagram of an information processing system 601 according to a sixth embodiment.
FIG. 23 is a sequence diagram of a user authentication phase in the information processing system 601 illustrated in FIG. 22.
FIG. 24 is a block diagram of an information processing system 701 according to a seventh embodiment.
FIG. 25 is a sequence diagram of a user authentication phase in the information processing system 701 illustrated in FIG. 24.

### Description of Embodiments

### (First Embodiment)

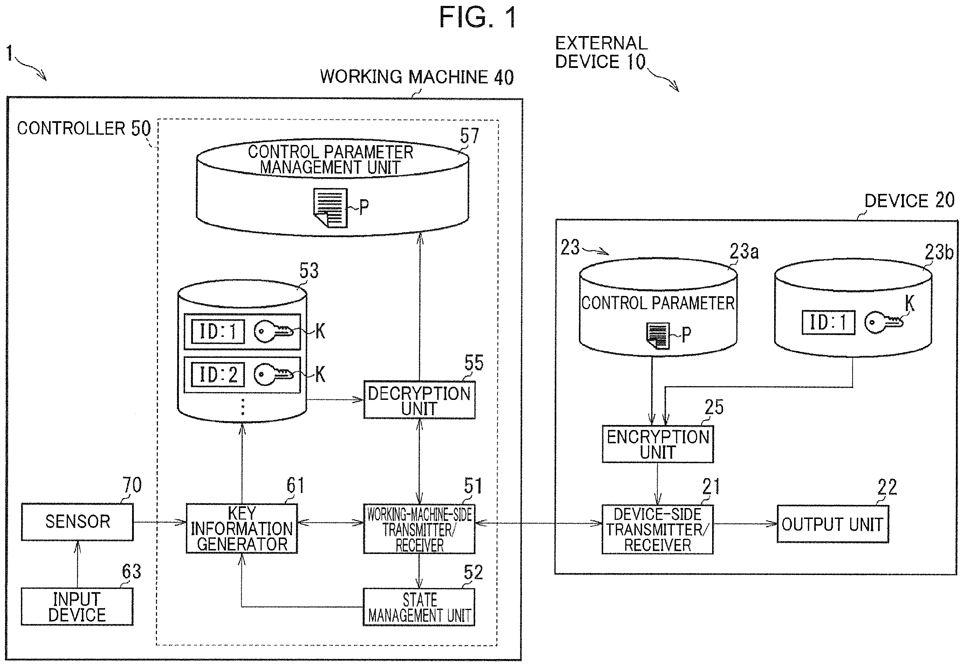

With reference to FIGS. 1 to 9, a description will be given of an information processing system 1, an information processing method, and a program according to a first embodiment.

As illustrated in FIG. 1, the information processing system 1 is a system that processes information to be transmitted and received between an external device 10 (computer) and a working machine 40. The information processing system 1 may be an information encryption system, an information manipulation detection system (refer to third embodiment and the like), or an information user authentication system (refer to fifth embodiment and the like). The information processing system 1 includes the external device 10 and the working machine 40.

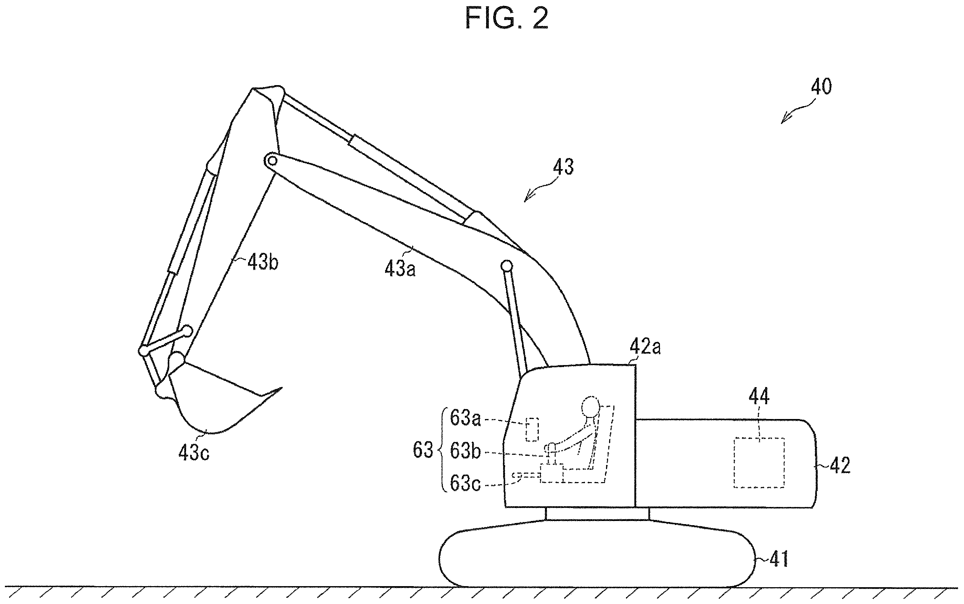

The external device 10 is a device external to the working machine 40. Examples of the information to be transmitted and received between the external device 10 and the working machine 40 include a control parameter P and worker identification information (ID). The control parameter P is a parameter for use in controlling operations of the working machine 40. Examples of the control parameter P include setting information, such as information regarding a relationship between an operation amount of an operation lever 63b and an operation speed of the working machine 40 illustrated in FIG. 2, a priority order of the operations when the operation lever 63b are operated a plurality of times, and limitations on operations of the working machine 40. The ID is information for use in uniquely identifying a worker (operator) who uses the working machine 40 and may be an employee number, for example. As illustrated in FIG. 1, the external device 10 includes a device 20.

The device 20 is a device (worker device and worker possession device) to be carried by an operator. A plurality of devices 20 are to be carried by respective workers. The device 20 may be a device that can process information or a device that only retains (stores) information. Examples of the device 20 that can process information include a smartphone, a tablet, a mobile phone, and a notebook personal computer (PC). Examples of the device 20 that only retains information includes an integrated circuit (IC) card and a flash memory (e.g., an SD memory card and a universal serial bus (USB) flash drive). In this embodiment, a description will be given regarding a case where the device 20 is implemented by a device that can process information.
The device 20 includes a device-side transmitter/receiver 21, an output unit 22, a retainer 23, and an encryption unit 25.

The device-side transmitter/receiver 21 (information transmitting/receiving device) transmits and receives information between the device 20 and the working machine 40. A specific communication method performed by the device-side transmitter/receiver 21 will be described later.

The output unit 22 (output device) outputs a notification or other messages to the worker. The output unit 22 outputs, for example, at least one of display and sound. The output unit 22 includes, for example, at least one of a display unit and a speaker. The output unit 22 is a part of the device 20 in the example illustrated in FIG. 1; however, the output unit 22 may be provided outside the device 20. For example, the output unit 22 may be an external display unit or an external speaker that is connected to the device 20.

The retainer 23 retains (stores) and manages information. For example, the retainer 23 includes a nonvolatile storage device. The retainer 23 may be a storage area that is a part of the storage device. The retainer 23 includes: a retainer 23a that retains control parameters P; and a retainer 23b that retains IDs and key information K (described later). To suppress information from leaking to a third party (attacker), the retainer 23 preferably has as high tamper resistance as possible. Specifically, for example, the retainer 23 may be implemented by a trusted platform module (TPM) or a trusted execution environment (TEE). Of the retainer 23, an area (retainer 23b) that retains key information K more preferably has high tamper resistance. Also, a part (e.g., the encryption unit 25) that processes various information (e.g., key information K and control parameters P) and a part (e.g., the key information management unit 53) that retains various information, both of which will be described later, more preferably have as high tamper resistance as possible. The various information may contain digital signatures. The various information may be retained in an encrypted state.

The encryption unit 25 (information encryption device) encrypts information (e.g., the control parameter P) with key information K. Details of this encrypting method will be described later.

As illustrated in FIG. 2, the working machine 40 is formed of a machine that performs work. The working machine 40 may be a construction machine that performs construction work, for example. The construction machine may be an excavator or a crane, for example. A description will be given below regarding a case where the working machine 40 is implemented by an excavator. The working machine 40 includes a lower travelling body 41, an upper slewing body 42, an attachment 43, and an engine 44, and also includes a controller 50, an input device 63, and a sensor 70 illustrated in FIG. 1.

As illustrated in FIG. 2, the lower travelling body 41 allows the working machine 40 to travel. The upper slewing body 42 is swingably mounted on the lower travelling body 41. The upper slewing body 42 includes a cab 42a in which a worker operates the working machine 40.

The attachment 43 is a device that performs work. The attachment 43 includes a boom 43a, an arm 43b, and an end attachment 43c, for example. The boom 43a is movable (rotatable) upward and downward relative to the upper slewing body 42. The arm 43b is rotatable relative to the boom 43a. The end attachment 43c is provided at the end of the attachment 43 and rotatable relative to the arm 43b. Examples of the end attachment 43c include a bucket that scoops earth and sand, a device (e.g., grapple) that takes hold of an object, and a device (e.g., breaker) that performs crushing.

The engine 44 is a drive source of the working machine 40. The engine 44 may drive a pump (not illustrated) or a generator. The pump driven by the engine 44 supplies hydraulic oil to hydraulic actuators (e.g., a hydraulic motor and a hydraulic cylinder). The hydraulic actuator is actuated to activate the working machine 40.

As illustrated in FIG. 1, the controller 50 (control device and computer) is mounted in the working machine 40. The controller 50 inputs and outputs signals, performs calculation (processes), and stores information, for example. The controller 50 includes a working-machine-side transmitter/receiver 51, a state management unit 52, a key information management unit 53, a decryption unit 55, a control parameter management unit 57, and a key information generator 61.

The working-machine-side transmitter/receiver 51 (information transmitting/receiving device) transmits and receives information between the working machine 40 and the external device 10 (e.g., the device 20). The communication between the working machine 40 and the external device 10 may be performed in a wireless manner, in a wired manner, or in a wireless and wired manner. The communication between the working machine 40 and the external device 10 may be performed directly or via a communication device (not illustrated) (or indirectly). For example, the communication between the working machine 40 and the external device 10 may be performed by multi-hop if a reliable path can be constructed by verifying the authenticity of a communication device (not illustrated).

The state management unit 52 manages a state of the working machine 40. The state management unit 52 switches the working machine 40 between a key information generation state and a state that is not the key information generation state (normal state).

The key information management unit 53 retains (manages) key information K. The key information management unit 53 retains a plurality of IDs of respective workers who use the working machine 40 and key information K related to the IDs (as pairs). Similar to the retainer 23, the key information management unit 53 preferably has as high tamper resistance as possible.

The decryption unit 55 (information decryption device) decrypts information (e.g., control parameter P) with key information K. Details of this decryption method will be described later. The decryption unit 55 determines whether information has been decrypted correctly. Details of this determination method will be described later.

The control parameter management unit 57 manages control parameter P. The control parameter management unit 57 stores control parameter P that has been decrypted by the decryption unit 55.

The key information generator 61 (key information generation device) generates key information K. Details of the method in which the key information generator 61 generates the key information K based on one or more sensor values received from the sensor 70 will be described later. The key information K is used to transmit and receive information between the working machine 40 and the external device 10. The key information K may be used to encrypt and decrypt information, to detect manipulation of information (refer to the third embodiment and the like), or to authenticate an information user (refer to the fifth embodiment and the like). For example, the key information K may be used to transmit and receive control parameter P between the working machine 40 and the external device 10, or to transmit and receive information other than the control parameter P. In this case, a description will be given regarding a case where the key information K is used to encrypt and decrypt the control parameter P.

As illustrated in FIG. 2, the input device 63 is a device to be operated by an operator (worker) of the working machine 40. The input device 63 is disposed inside the cab 42a, for example. The input device 63 includes an operation panel 63a, the operation lever 63b, and a lever lock 63c. The operation panel 63a is a device for use in performing various operations and is, for example, a device with a screen. The operation panel 63a has at least one button. The button on the operation panel 63a may be a physical button or a button displayed on the screen. The operation panel 63a may be a permanent panel fixed in the cab 42a or may be a device or an information terminal, such as a tablet PC, which is not fixed in the cab 42a. When the operation panel 63a is not fixed in the cab 42a, the operation panel 63a may transmit information on an operation of the button to a button on/off sensor 71a through wireless communication or wired communication. The operation lever 63b is an operation unit that operates the working machine 40. The operation lever 63b is an input device that operates travelling of the lower travelling body 41, the swing of the upper slewing body 42 relative to the lower travelling body 41, and activation of the attachment 43. The lever lock 63c is an input device that a worker pulls up or down when entering or leaving the cab 42a and that switches the operation lever 63b between operational validity and invalidity (locking). Note that the input device 63 may include any input device other than that in the above example. For example, the input device 63 may include a pedal for use in operating the working machine 40.

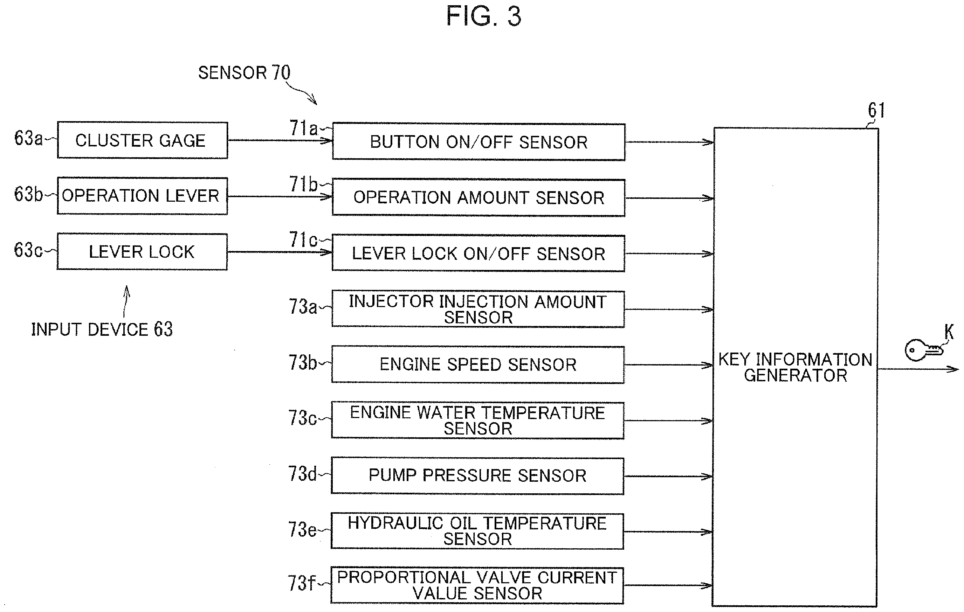

As illustrated in FIG. 3, the sensor 70 detects various information and outputs the sensor values (detection value). The sensor 70 is a sensor permanently installed in the working machine 40 (see FIG. 2). The sensor 70 is not necessarily provided only to generate the key information K (see FIG. 1). The sensor 70 includes a sensor that detects a state of an operation of the input device 63 and a sensor that detects other states. Specifically, the sensor 70 that detects an operation state of the input device 63 includes a button on/off sensor 71a, an operation amount sensor 71b, and a lever lock on/off sensor 71c. Furthermore, the sensor 70 includes an injector injection amount sensor 73a, an engine speed sensor 73b, an engine water temperature sensor 73c, a pump pressure sensor 73d, a hydraulic oil temperature sensor 73e, and a proportional valve current value sensor 73f.

The button on/off sensor 71a detects whether an operation state of as button on the operation panel 63a is an on or off state. Button on/off sensors 71a is provided for each of a plurality of buttons on the operation panel 63a. The operation amount sensor 71b detects a value (at least one of a current and hydraulic pressure) varying in response to an operation of the operation lever 63b. Operation amount sensors 71b are provided for operation types (e.g., the swing, upward movement of the boom 43a, downward movement of the boom 43a) of the operation lever 63b illustrated in FIG. 2. The lever lock on/off sensor 71c illustrated in FIG. 3 detects whether the lever lock 63c is turned on or off.

The injector injection amount sensor 73a detects a fuel injection amount of an injector in the engine 44 (see FIG. 2). The engine speed sensor 73b detects a speed of the engine 44. The engine speed sensor 73b may detect the speed of the engine 44 by using a detection result of a speed of the pump driven by the engine 44. The engine water temperature sensor 73c detects a temperature of cooling water in the engine 44. The pump pressure sensor 73d detects a pressure of hydraulic oil discharged from the pump driven by the engine 44. The hydraulic oil temperature sensor 73e detects a temperature of the hydraulic oil flowing through a hydraulic circuit of the working machine 40 (see FIG. 2). The proportional valve current value sensor 73f detects a current (command to the proportional valve) of the proportional valve provided in the hydraulic circuit. The proportional valve current value sensor 73f may be formed by the controller 50. More specifically, the controller 50 may acquire a value that the controller 50 outputs to the proportional valve.

Note that sensor values used to generate the key information K may be different from those in the above example. For example, if an input device 63 other than that in the above example is provided, sensor values of the sensor 70 that detects the operation of the input device 63 may be used to generate the key information K. For example, if a pedal or other part for use in operating the working machine 40 is provided in the working machine 40, sensor values of the sensor 70 that detects an operation amount of this pedal may be used to generate the key information K. For example, sensor values of the sensor 70 (see FIG. 3) that detects a posture (e.g., a posture of attachment 43, a swing angle of the upper slewing body 42 relative to the lower travelling body 41) of the working machine 40 illustrated in FIG. 2 may be used to generate the key information K (see FIG. 3). For example, sensor values of the sensor 70 that detects a state of at least one of a position, speed, and acceleration of the working machine 40 may be used to generate the key information K. For example, sensor values of a camera (included in the sensor 70) provided in the working machine 40 may be used to generate the key information K. At least part of the example of the sensor 70 may not be provided in the working machine 40. Only sensor values of the sensor 70 present in the working machine 40 may be used to generate the key information K.

### (Operation)

The information processing system 1 illustrated in FIG. 1 is configured to operate in the following manner. An outline of an operation (information processing method and program) of the information processing system 1 is as follows.

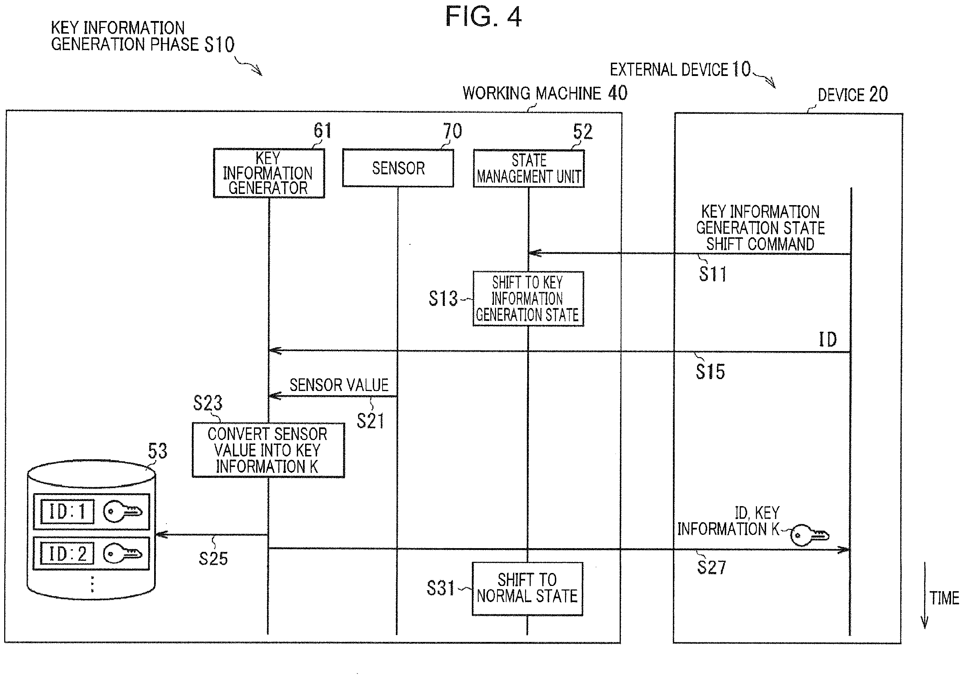

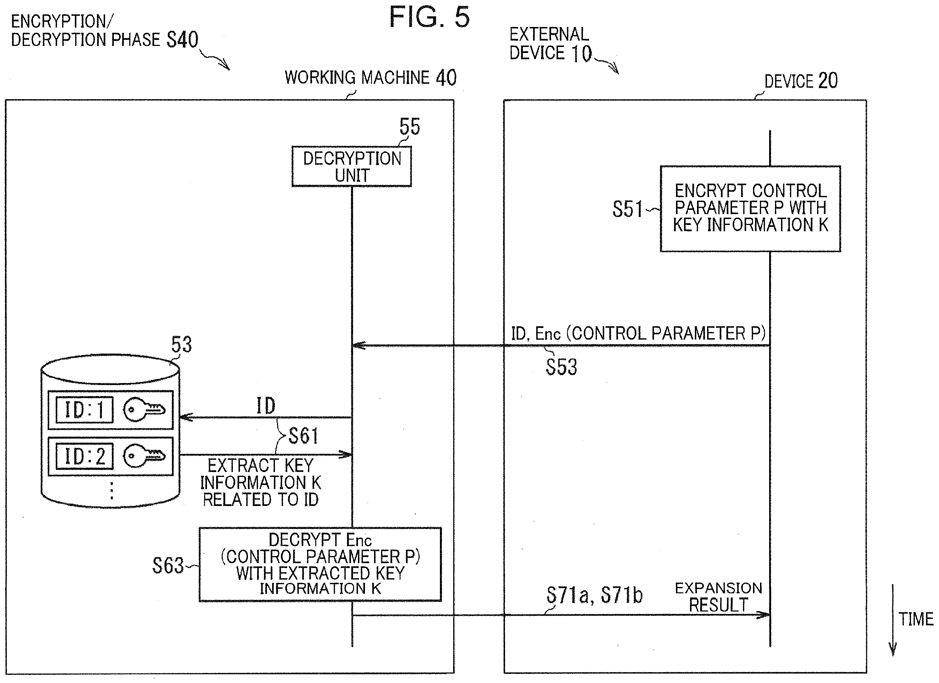

The operation of the information processing system 1 includes a key information generation phase S10 (see FIGS. 4, 6, and 7) and an encryption/decryption phase S40 (see FIGS. 5, 8, and 9). As illustrated in FIG. 4, the key information generation phase S10 is a phase in which key information K for use in transmitting and receiving information (control parameter P in this case) is generated. As illustrated in FIG. 5, the encryption/decryption phase S40 is performed as follows. The external device 10 (e.g., the device 20) transmits the control parameter P to the working machine 40 by using the key information K. More specifically, the device 20 encrypts the control parameter P with the key information K (Step S51) and then transmits the encrypted control parameter P to the working machine 40 (Step S53). This can suppress the control parameter P from being stolen by a third party. In addition, the working machine 40 decrypts the encrypted control parameter P with the key information K (Step S63). This can confirm that the control parameter P (more specifically, the encrypted control parameter P) received by the working machine 40 is a control parameter P expected by the worker. Details of the operation of the information processing system 1 are as follows. Hereinafter, the processes (steps) will be described in sequence. Note that this process sequence may be modified as appropriate.

### (Key Information Generation Phase S10)

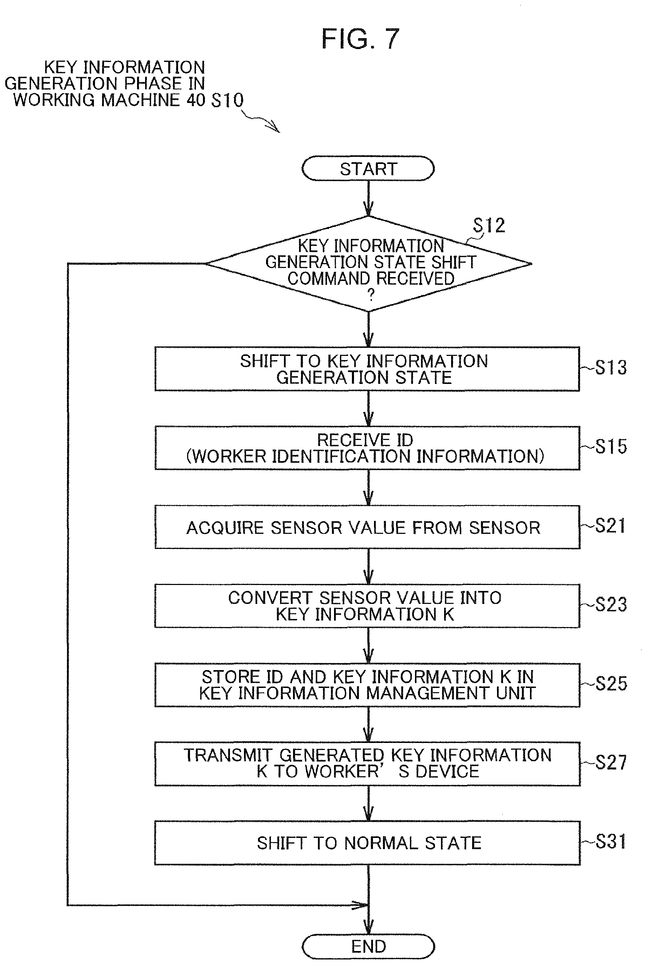

In the key information generation phase S10, as illustrated in FIG. 4, the key information K for use in transmitting and receiving the control parameter P (see FIG. 5) is generated. The device 20 transmits, to the state management unit 52 in the working machine 40, a command (key information generation state shift command) for shifting the working machine 40 from the normal state to the key information generation state (Step S11). The information (key information generation state shift command in this case) is transmitted and received via the device-side transmitter/receiver 21 and the working-machine-side transmitter/receiver 51 illustrated in FIG. 1. The same applies to the following transmission and reception. As illustrated in FIG. 4, the state management unit 52 causes the working machine 40 (see FIG. 1) to shift (transition) from the normal state to the key information generation state (Step S13). In this case, if the state management unit 52 does not receive the key information generation state shift command (NO in Step S12), the working machine 40 terminates the process in the key information generation phase S10, as illustrated in FIG. 7.

As illustrated in FIG. 4, the device 20 transmits an ID to the key information generator 61 in the working machine 40 (Step S15). Alternatively, the transmission of the ID from the device 20 to the working machine 40 (Step S15) may be performed simultaneously with the transmission of the key information generation state shift command (Step S11). Hereinafter, the processes described as separate processes may be performed simultaneously, or the processes described as processes performed simultaneously may be performed separately. A part of the working machine 40 that receives the ID corresponds to the key information generator 61 in the example illustrated in FIG. 4; however, this part does not necessarily have to be the key information generator 61. In the following description of the transmission and reception of information, the part that transmits and receives the ID may be changed as appropriate. The key information generator 61 acquires the sensor values from the sensor 70 (Step S21). The key information generator 61 acquires the sensor values over a predetermined time. The predetermined time over which the key information generator 61 acquires the sensor value may be a certain moment or a time having a length. For example, the length of the predetermined time over which or the time at which the key information generator 61 acquires the sensor values may depend on the type of the sensor 70 or may be constant.

The key information generator 61 generates the key information K by converting the sensor values into the key information K (Step S23). Details of the method in which the key information generator 61 generates the key information K are as follows. As illustrated in FIG. 3, the sensor 70 includes a plurality of types (e.g., the injector injection amount sensor 73a and the engine speed sensor 73b). Thus, the sensor values also include a plurality of types. The key information generator 61 generates the key information K, based on at least one type of sensor value out of the plurality of types of sensor values. There are various methods to select a sensor value by which the key information generator 61 generates the key information K. For example, the key information generator 61 may select one or both of a sensor value related to the operational state of the input device 63 and a sensor value related to a state other than the operational state of the input device 63. The key information generator 61 may select the same sensor value redundantly. For example, the key information generator 61 may select sensor values of the same type at the same time redundantly or may select sensor values of the same type at different times. The key information generator 61 may change the type of the sensor value to be selected for each generation of the key information K, or may determine the sensor value to be selected in advance.

A specific example of the method in which the key information generator 61 converts the sensor value into the key information K is as follows. [Example 1] The key information generator 61 sets the key information K to a bit string generated based on the sensor value. For example, the key information generator 61 converts the sensor value into the bit string in the following manner. [Example 1A] If the sensor value includes on or off data (e.g., the sensor value of the button on/off sensor 71a), the conversion manner is as follows. In this case, the key information generator 61 sets the bit string to "0/1" when the sensor value indicates on, and sets the bit string to "1/0" when the sensor value indicates off. The on and off may be opposite to each other. [Example 1B] If the sensor value includes a numerical value (such as a pressure value or a current value), the key information generator 61 may convert the sensor value into the bit string by converting the numerical value of the sensor value into a binary number. [Example 1C] The key information generator 61 may convert the sensor value into the bit string based on time variations in the sensor value (time-series data) within a predetermined time. For example, the key information generator 61 may convert sensor values at individual times into bit strings and then combine these bit strings. [Example 1D] If a plurality of sensor values are used to generate the key information K, the key information generator 61 may convert these sensor values into bit strings and then combine these bit strings together.

[Example 2] The key information generator 61 may convert a sensor value and/or a bit string at least once with a predetermined function. [Example 2A] The key information generator 61 may convert a bit string finally obtained by converting the sensor value, with a predetermined function.

[Example 2B] The key information generator 61 may convert a sensor value and/or a bit string at a stage before it is finally obtained, with a predetermined function. [Example 2Ba] The key information generator 61 may convert, at times, sensor values (time series data) being time-varying within a predetermined time with a predetermined function. [Example 2Bb] The key information generator 61 may convert a plurality of types of sensor values with a predetermined function.

[Example 2C] The predetermined function may be addition, subtraction, multiplication, or division, may be a one-way function, or may be another function. [Example 2Ca] The one-way function may be, for example, a secure hash algorithm (SHA)-2 (e.g., SHA-256 or SHA-512).

As illustrated in FIG. 4, the key information generator 61 stores the ID and the generated key information K in the key information management unit 53 (Step S25). In this case, the key information management unit 53 may store the ID and the key information K in association with each other. The key information generator 61 transmits the key information K to the device 20 (Step S27). The device 20 stores the received key information K in the retainer 23b (see FIG. 1). The state management unit 52 shifts the working machine 40 to the normal state (Step S31). In the normal state, the key information generator 61 acquires no sensor values and generates no key information.

### (Encryption/Decryption Phase S40)

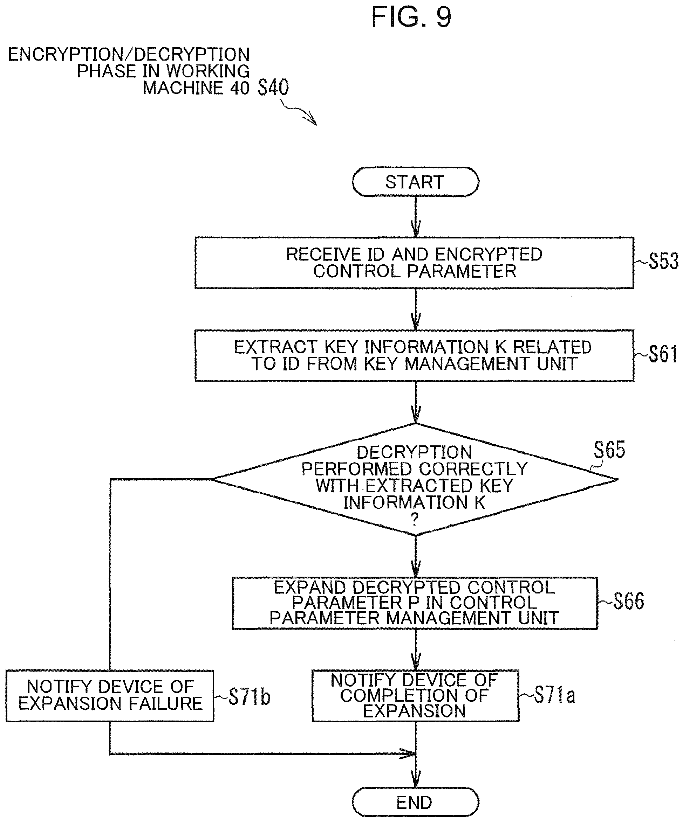

In the encryption/decryption phase S40, as illustrated in FIG. 5, the control parameter P is encrypted and decrypted. The encryption unit 25 (see FIG. 1) in the device 20 encrypts the control parameter P with the key information K (Step S51). The encryption unit 25 may perform the encryption in accordance with an existing common key encryption scheme, such as an advanced encryption standard (AES) or a common key encryption scheme unique to the information processing system 1 (see FIG. 1). The device 20 transmits the ID and the encrypted control parameter P ("Enc (control parameter P)" in FIG. 5) to the decryption unit 55 in the working machine 40 (Step S53). The decryption unit 55 extracts the key information K related to the received ID from the key information management unit 53 (Step S61). The decryption unit 55 decrypts the encrypted control parameter P with the extracted key information K (Step S63). The decryption unit 55 determines whether the decryption has been successfully or unsuccessfully performed (Step S65 illustrated in FIG. 9). For example, the decryption unit 55 determines whether the decryption has been successfully performed with parity bits.

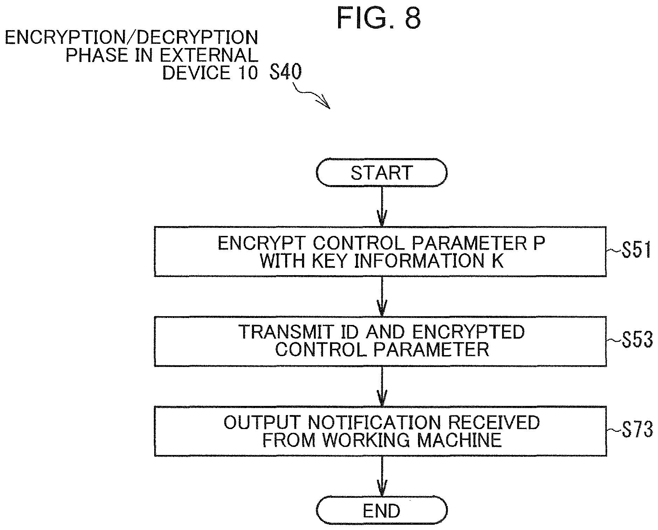

After having successfully decrypted the control parameter P, that is, after having correctly decrypted the control parameter P with the key information K, the decryption unit 55 illustrated in FIG. 1 performs the following processes. In this case, for example, the decryption unit 55 in the working machine 40 expands the decrypted control parameter P in the control parameter management unit 57 (Step S66 illustrated in FIG. 9). As a result, the operation of the working machine 40 illustrated in FIG. 1 is controlled based on the decrypted control parameter P. Furthermore, as illustrated in FIG. 5, the decryption unit 55 transmits (notifies) a message (expansion result) to the device 20 indicating that the control parameter P has been completely expanded (Step S71a illustrated in FIG. 9). When receiving the expansion result, the device 20 causes the output unit 22 illustrated in FIG. 1 to output the expansion result (Step S73 illustrated in FIG. 8).

When the decryption unit 55 illustrated in FIG. 1 fails to decrypt the control parameter P (when the decryption unit 55 fails to decrypt the control parameter P correctly with the key information K), the following process is performed. In this case, the decryption unit 55 notifies the device 20 that the expansion has failed (expansion result) (Step S71b illustrated in FIG. 9). When receiving the expansion result, the device 20 causes the output unit 22 illustrated in FIG. 1 to output the expansion result (Step S73 illustrated in FIG. 8). When the decryption unit 55 fails to perform the decryption, the working machine 40 does not expand the unsuccessfully decrypted control parameter P in the control parameter management unit 57. As described above, only when the control parameter P is successfully decrypted, the control parameter P is expanded in the control parameter management unit 57. In this way, the control parameter P related to the worker who uses the working machine 40 (specifically, related to the ID) can be expanded in the working machine 40. This can suppress the control parameter P expanded in the working machine 40 from differing from a control parameter P expected by the worker.

### (Problem Possibly Arising When Information Is Not Encrypted)

When information is transmitted and received in plain text between the external device 10 and the working machine 40, there is a risk that a third party steals and leaks this information. If the information is the control parameter P, the third party (e.g., another company) may use the leaked control parameter P to analyze the working machine 40. In addition, when the third party analyzes the control parameter P in plain text and acquires a proper format of the control parameter P, the control parameter P in the proper format which is not expected by a worker may be expanded in the working machine 40. In this case, the working machine 40 may perform an operation that is not expected by the worker, or the working machine 40 may fail to operate. However, the information processing system 1 can control these problems by encrypting the control parameter P.

The contents of the first embodiment are summarized in the following manner.

As illustrated in FIG. 1, the information processing system 1 includes the sensor 70 and the key information generator 61. The sensor 70 is provided in the working machine 40. The key information generator 61 is provided in the working machine 40 and generates key information K based on one or more sensor values received from the sensor 70. The key information K is used to transmit and receive information between the working machine 40 and the external device 10 provided outside the working machine 40.

The above configuration generates the key information K based on the sensor values of the sensor 70 provided in the working machine 40. Therefore, the working machine 40 can easily generate the key information K as compared with a case where the working machine 40 generates the key information K without using a sensor value of the sensor 70. Specifically, it is possible to make a dedicated random number generating device that generates the key information K unnecessary. This reduces a requirement for a processing capability to generate the key information K (specifically, the processing capability of the controller 50).

Furthermore, the key information generator 61 in the information processing system 1 generates the key information K based on at least one of sensor values (2a) to (2f) listed below. (2a) The amount of fuel discharged from an injector of the engine 44 in the working machine 40 illustrated in FIG. 2. (2b) The speed of the engine 44. (2c) The temperature of the cooling water in the engine 44. (2d) The pressure of the pump in the working machine 40. (2e) The temperature of the hydraulic oil in the working machine 40. (2f) The current in the proportional valve of the working machine 40.

Furthermore, in the information processing system 1, each sensor value corresponds to a sensor value of the sensor 70 normally mounted on the working machine 40 illustrated in FIG. 1. Therefore, the key information generator 61 can generate the key information K by using sensor values of the sensor 70 normally mounted on the working machine 40.

Furthermore, the sensor 70 in the information processing system 1 detects an operation of the input device 63 operated by an operator of the working machine 40. The key information generator 61 generates the key information K based on at least one of sensor values (3a) to (3c) listed below. (3a) Switch-on or off of a button of the operation panel 63a of the working machine 40 illustrated in FIG. 2. (3b) At least one of a current and pressure varying in response to an operation of the operation lever 63b of the working machine 40. (3c) Turn-on or off of the lever lock 63c of the working machine 40.

Furthermore, in the information processing system 1, each sensor value corresponds to a sensor value related to an operation of the input device 63 normally mounted on the working machine 40 illustrated in FIG. 1. Therefore, the key information generator 61 can generate the key information K by using sensor values of the sensor 70 normally mounted on the working machine 40.

Furthermore, the key information generator 61 in the information processing system 1 sets the key information K to a bit string generated based on the sensor values.

This configuration enables the key information generator 61 to derive the key information K formed of the bit string from the sensor values.

Furthermore, the key information generator 61 in the information processing system 1 sets the key information K to a bit string generated based on sensor values being time-varying within a predetermined time.

This configuration enables the key information generator 61 to derive the key information K formed of the bit string, based on the time-varying sensor values (time-series data).

Furthermore, one of the external device 10 and the working machine 40 in the information processing system 1 corresponds to a transmission-side apparatus that transmits information, and the other corresponds to a reception-side apparatus that receives information. The transmission-side apparatus (e.g., the external device 10) encrypts information with key information K identical to key information K stored in the reception-side apparatus (e.g., the working machine 40) (Step S51 (see FIG. 5)). The reception-side apparatus (e.g., the working machine 40) decrypts encrypted information received from the transmission-side apparatus (e.g., the external device 10) with the key information K stored in the reception-side apparatus (Step S63 (see FIG. 5)).

The above configuration encrypts information transmitted and received between the external device 10 and the working machine 40, thereby successfully suppressing the information from being stolen (eavesdropped) by a third party during the transmission and reception of the information between the external device 10 and the working machine 40. As a result, it is possible to suppress the external device 10 or the working machine 40 from operating based on information stolen by the third party or based on the information generated (e.g., modified) from information stolen by the third party.

Furthermore, in the information processing system 1, the above information (information transmitted and received between the external device 10 and the working machine 40) corresponds to a control parameter P for use in controlling an operation of the working machine 40. The external device 10 transmits the control parameter P to the working machine 40 by using the key information K. The working machine 40 determines, based on the key information K, whether to control the operation of the working machine 40 based on the control parameter P.

In the above configuration, it is determined, based on the key information K, whether to control the operation of the working machine 40 based on the control parameter P. Therefore, the operation of the working machine 40 is controlled by an appropriate control parameter P being based on the key information K.

Furthermore, the external device 10 in the information processing system 1 encrypts the control parameter P with the key information K received from the working machine 40 (Step S51 illustrated in FIG. 5). As illustrated in FIG. 5, the working machine 40 decrypts the encrypted control parameter P received from the external device 10 with the key information K stored in the working machine 40 (Step S63).

The above configuration encrypts the control parameter P, thereby suppressing the control parameter P from being stolen (eavesdropped) by a third party during transmission and reception of the control parameter P between the external device 10 and the working machine 40. As a result, the following effects can be produced. It is possible to suppress a third party from generating, for example, an improper, modified control parameter P based on a stolen control parameter P, transmitting the improper control parameter P to the working machine 40, and expanding the control parameter P. This can suppress the working machine 40 from performing an operation that is not expected by a worker, or from failing to operate.

Furthermore, conditions for controlling the operation of the working machine 40 in the information processing system 1 based on the control parameter P includes a condition in which the control parameter P has been correctly decrypted by the key information K.

The above configuration can guarantee that the control parameter P to be used to control the operation of the working machine 40 has been correctly decrypted by the key information K.

In an information processing method according to the first embodiment, as illustrated in FIG. 4, an information processing method in this embodiment includes Step S23 at which key information K is generated based on a sensor value received from the sensor 70 provided in the working machine 40. The key information K is used to transmit and receive information between the working machine 40 and the external device 10 provided outside the working machine 40 (see FIG. 5 and the like).

With this configuration, the same effects as those described in the information processing system 1 can be obtained.

Furthermore, in the information processing method, one of the external device 10 and the working machine 40 illustrated in FIG. 5 corresponds to a transmission-side apparatus that transmits information, and the other corresponds to a reception-side apparatus that receives information. The information processing method includes the following steps (a17) and (b17).

(a17) The transmission-side apparatus (e.g., the external device 10) encrypts information with key information K identical to key information K stored in the reception-side apparatus (e.g., the working machine 40) (Step S51). (b17) The reception-side apparatus decrypts the encrypted information received from the transmission-side apparatus with the key information stored in the reception-side apparatus (Step S63).

With this configuration, the same effects as those described in the information processing system 1 can be obtained.

Furthermore, in the information processing method, the information (information transmitted and received between the working machine 40 and the external device 10) corresponds to a control parameter P for use in controlling an operation of the working machine 40. The information processing method includes the following steps (a20) and (b20).

(a20) The external device 10 transmits the control parameter P to the working machine 40 by using the key information K (Step S53). (b20) A step of determining, based on the key information K, whether the working machine 40 controls an operation of the working machine 40 based on the control parameter P (refer to Step S63 and Step S65 illustrated in FIG. 9).

With this configuration, the same effects as those described in the information processing system 1 can be obtained.

As illustrated in FIG. 4, a program in the first embodiment causes the controller 50 (computer) to perform Step S23 at which key information K is generated based on a sensor value received from the sensor 70 provided in the working machine 40. The key information K is used to transmit and receive information between the working machine 40 and the external device 10 provided outside the working machine 40 (see FIG. 5 and the like).

With this configuration, the same effects as those described in the information processing system 1 can be obtained.

Furthermore, in the program, one of the external device 10 and the working machine 40 corresponds to a transmission-side apparatus that transmits information, and the other corresponds to a reception-side apparatus that receives information. The program includes the above steps (a17) and (b17).

With this configuration, the same effects as those described in the information processing system 1 can be obtained.

Furthermore, in the program, the information (information transmitted and received between the working machine 40 and the external device 10) corresponds to the control parameter P for use in controlling an operation of the working machine 40. The program includes the above steps (a20) and (b20).

With this configuration, the same effects as those described in the information processing system 1 can be obtained.

### (Second Embodiment)

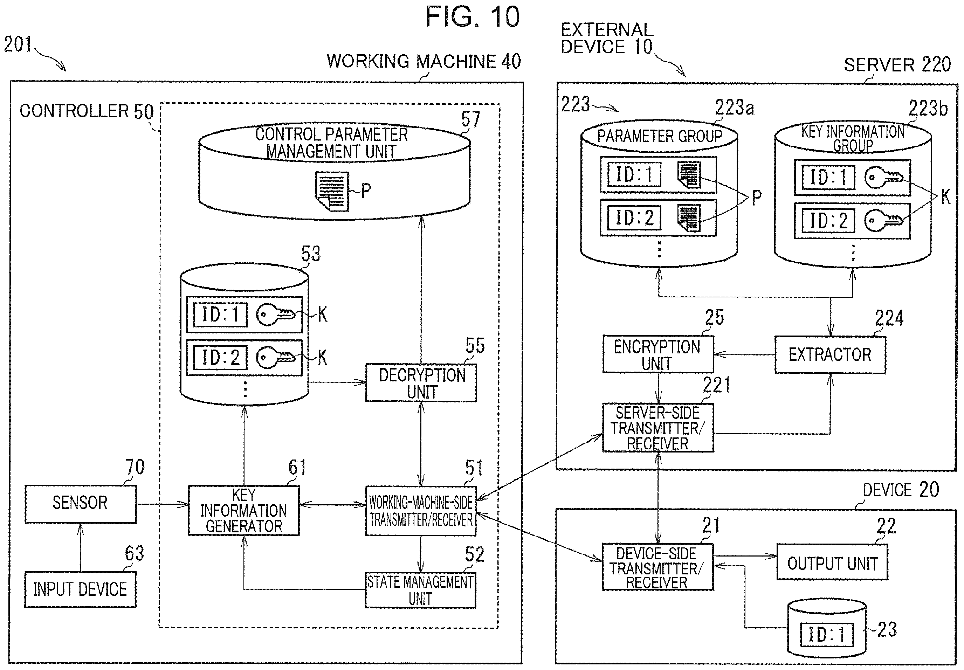

With reference to FIGS. 10 to 11, a description will be given of an information processing system 201 (see FIG. 10), an information processing method, and a program according to a second embodiment. Further, differences from those according to the first embodiment will also be described. Note that the description about features common to both the second embodiment and the first embodiment will be omitted. The description of the common features will also be omitted when other embodiments are described.

As illustrated in FIG. 10, an external device 10 includes a device 20 and a server 220.

In this embodiment, as illustrated in FIG. 10, some of the components (e.g., the encryption unit 25) of the device 20 in the example illustrated in FIG. 1 are provided in the server 220. The device 20 may not include the encryption unit 25. A device-side transmitter/receiver 21 transmits and receives information not only between a working machine 40 and the device 20 but also between the server 220 (server-side transmitter/receiver 221) and the device 20. A retainer 23 in the device 20 may retain IDs and may not retain key information K. The description about the device 20 in the first embodiment may be replaced with the description about the device 20 or the server 220 (i.e., the description about the external device 10) (the same applies to the other embodiments).

The server 220 manages key information K in a centralized manner. The server 220 manages control parameters P in a centralized manner. The server 220 is provided separately from the device 20. The server 220 includes the server-side transmitter/receiver 221, the encryption unit 25 (the same as in the first embodiment), a retainer 223, and an extractor 224.

The server-side transmitter/receiver 221 transmits and receives information between the server 220 and the working machine 40 and between the server 220 and the device 20. The retainer 223 includes a retainer 223a that retains control parameters P and a retainer 223b that retains key information K. The retainer 223a retains IDs of a plurality of workers and control parameters P ("parameter group" in FIG. 10) in association with each other. The retainer 223b retains a plurality of IDs of respective workers and pieces of key information K in association with each other. In this way, the server 220 manages the key information K of the plurality of workers in the centralized manner, thus improving convenience of an administrator of the working machine 40, for example. Furthermore, the server 220 also manages the control parameters P in the centralized manner, thus improving convenience of an administrator and the like of the working machine 40. The extractor 224 extracts a specific piece of key information K and control parameter P from the retainer 223. Details of the extraction of a control parameter P will be described later.

### (Operation)

Differences in operation (information processing method and program) between the information processing system 201 in this embodiment and the information processing system 1 in the first embodiment (see FIG. 1) are as follows.

A key information generation phase S10 (see FIG. 4) is performed in substantially the same manner as in the first embodiment. In the example in FIG. 4, the device 20 transmits an ID to the key information generator 61 in the working machine 40 (Step S15). In this embodiment, the device 20 illustrated in FIG. 10 may transmit the ID to the working machine 40 via the server 220 or may transmit the ID directly to the working machine 40. Note that information other than the ID is transmitted and received in the same manner.

### (Encryption/Decryption Phase S240)

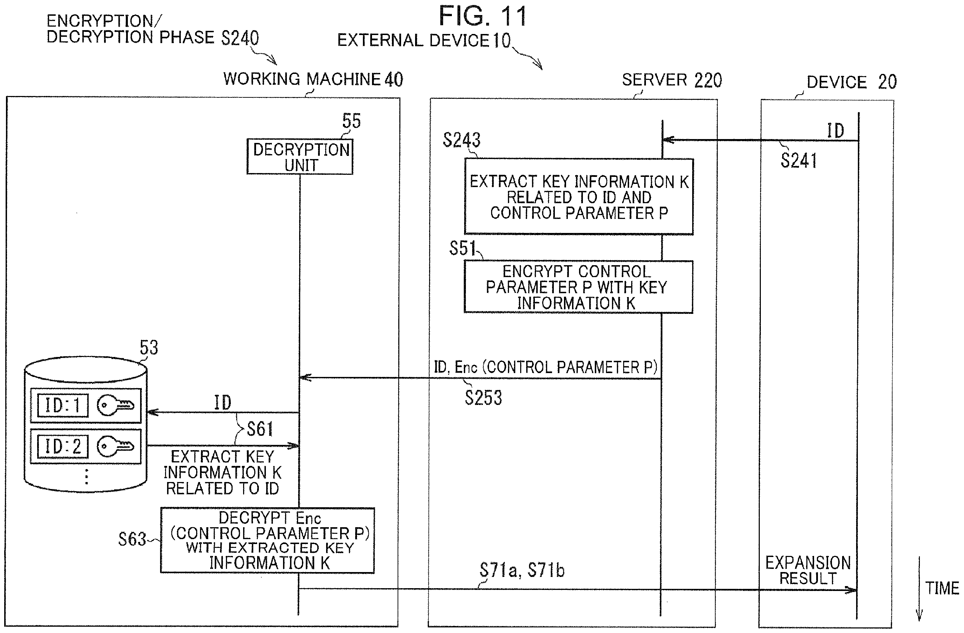

In the example illustrated in FIG. 1, the encryption unit 25 in the device 20 encrypts a control parameter P. In this embodiment, the encryption unit 25 in the server 220 illustrated in FIG. 10 encrypts a control parameter P. Details are as follows. As illustrated in FIG. 11, the device 20 transmits an ID to the extractor 224 (see FIG. 10) in the server 220 (Step S241). The extractor 224 illustrated in FIG. 10 extracts, from the retainer 223a, a control parameter P related to the ID received from the device 20. Then, the extractor 224 extracts, from the retainer 223b, key information K related to the ID received from the device 20 (Step S243 illustrated in FIG. 11).

The encryption unit 25 encrypts the extracted control parameter P with the extracted key information K (Step S51 illustrated in FIG. 11). In this case, if the extractor 224 fails to extract the control parameter P and the key information K related to the ID received from the device 20, the encryption unit 25 does not perform the encryption. As illustrated in FIG. 11, the server 220 transmits the ID and the encrypted control parameter P to a decryption unit 55 in the working machine 40 (Step S253). Processes performed after Step S53 are the same as in the first embodiment.

### (Third Embodiment)

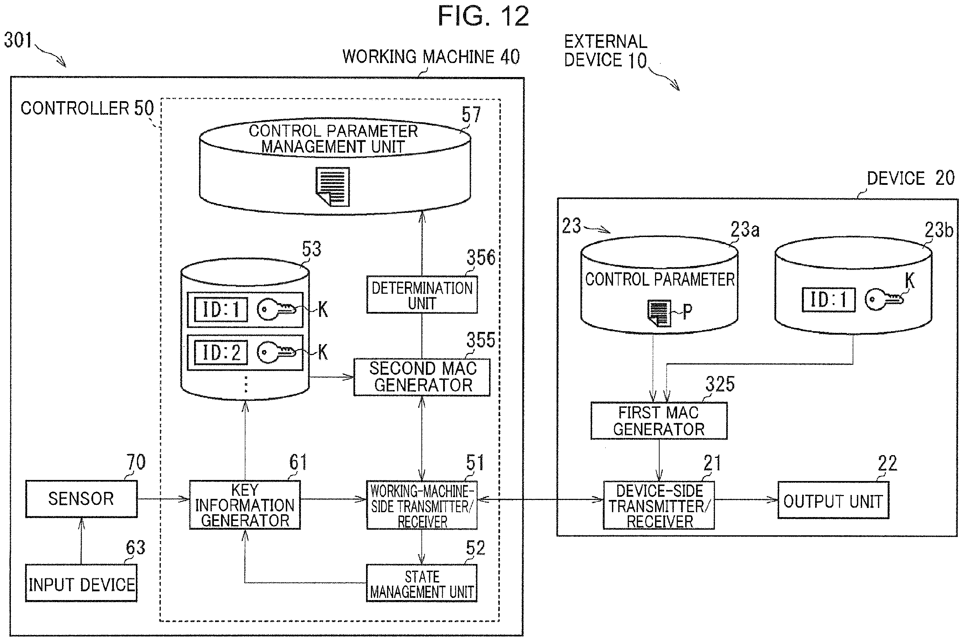

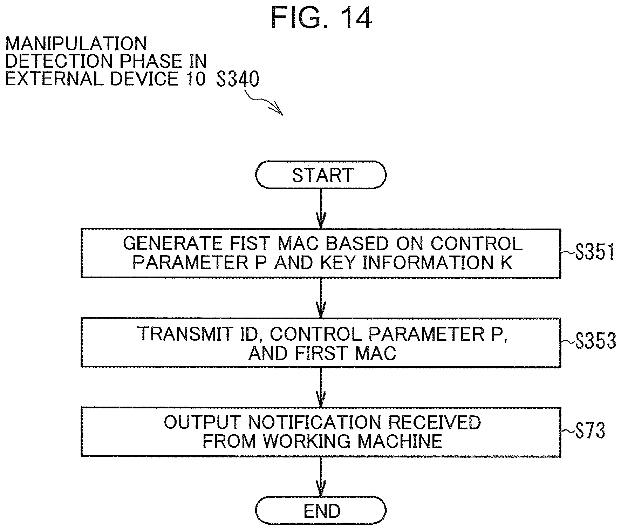

With reference to FIGS. 12 to 15, a description will be given of an information processing system 301 (see FIG. 12), an information processing method, and a program according to a third embodiment. Further, differences from those according to the first embodiment will also be described. The information processing system 1 (see FIG. 1) in the first embodiment serves as an information encryption system. On the other hand, the information processing system 301 (see FIG. 12) in this embodiment serves as an information manipulation detection system that detects whether information received by a working machine 40 illustrated in FIG. 12 has been manipulated.

A device 20 includes a first MAC generator 325 (message authentication code generation device). The MAC refers to a message authentication code. The first MAC generator 325 generates a first MAC (first authentication code) from key information K and other information (e.g., control parameter P). Details of the method of generating the first authentication code will be described later. The first MAC generator 325 is preferably mounted on a part having as high tamper resistance as possible. The same applies to a second MAC generator 355. The device 20 may not include the encryption unit 25 (see FIG. 1).

The working machine 40 includes the second MAC generator 355 (message authentication code generation device) and a determination unit 356. The second MAC generator 355 generates a second MAC (second authentication code) from key information K and other information (e.g., control parameter P). Details of the method of generating the second authentication code will be described later. The determination unit 356 (determination device) determines whether information (e.g., control parameter P) is has been manipulated, by comparing the first MAC with the second MAC. Details of this determination method will be described later. The working machine 40 may not include the decryption unit 55 (see FIG. 1).

### (Operation)

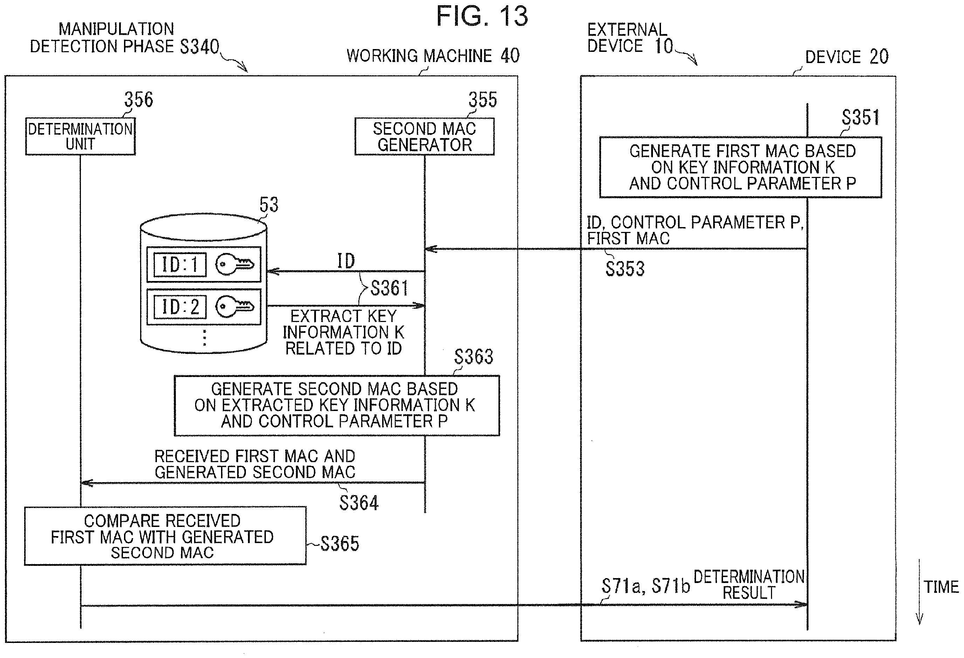

An outline of an operation (an information processing method and a program) of the information processing system 301 is as follows. The operation of the information processing system 301 includes: a key information generation phase S10 (see FIG. 4) that is the same as in the first embodiment; and a manipulation detection phase S340 (see FIGS. 13, 14, and 15).

### (Manipulation Detection Phase S340)

The manipulation detection phase S340 illustrated in FIG. 13 is a phase in which detection is made whether information (control parameter P in this case) has been manipulated. An outline of the manipulation detection phase S340 is as follows. An external device 10 (device 20) transmits a control parameter P to the working machine 40 by using key information K. More specifically, the device 20 generates the first MAC based on the key information K and the control parameter P (Step S351) and then transmits the control parameter P and the first MAC to the working machine 40 (Step S353). The working machine 40 generates the second MAC based on the key information K and the control parameter P (Step S363) and then determines whether the first MAC received from the device 20 coincides with the generated second MAC (Step S365). The working machine 40 can confirm that a third party has not manipulated the control parameter P by checking that the first MAC coincides with the second MAC. In this way, it is possible to confirm whether the control parameter P received by the working machine 40 is a control parameter P expected by a worker. Details of the manipulation detection phase S340 are as follows.

The first MAC generator 325 (see FIG. 12) in the device 20 generates a first MAC based on key information K and a control parameter P (Step S351). More specifically, the first MAC generator 325 illustrated in FIG. 12 generates the first MAC based on the key information K that is received from the working machine 40 and that is retained in a retainer 23b and the control parameter P retained in a retainer 23a. Specifically, for example, the first MAC generator 325 may generate the first MAC with a hash function. The first MAC may be a hash-based message authentication code (HMAC). The first MAC generator 325 may generate the first MAC based on block encryption. The first MAC may be a cipher-based MAC (CMAC). The first MAC generator 325 may generate the first MAC in accordance with a MAC generation scheme unique to information processing system 301. This specific example of the MAC generation is similar to the MAC generation by the second MAC generator 355. As illustrated in FIG. 13, the device 20 transmits an ID, the generated first MAC, and the control parameter P to the second MAC generator 355 in the working machine 40 (Step S353). A timing at which the device 20 transmits the ID to the working machine 40 may be before generation of the first MAC in the first MAC generator 325 (see FIG. 12).

The second MAC generator 355 in the working machine 40 extracts, from a key information management unit 53, key information K related to the ID received from the device 20 (Step S361). The second MAC generator 355 generates a second MAC based on the control parameter P received from device 20 and the key information K (key information K stored in working machine 40) extracted from the key information management unit 53 (Step S363). The second MAC generator 355 transmits both the first MAC and the second MAC to the determination unit 356 (Step S364). The determination unit 356 compares the first MAC with the second MAC (Step S365), thereby determining whether the first MAC coincides with the second MAC.

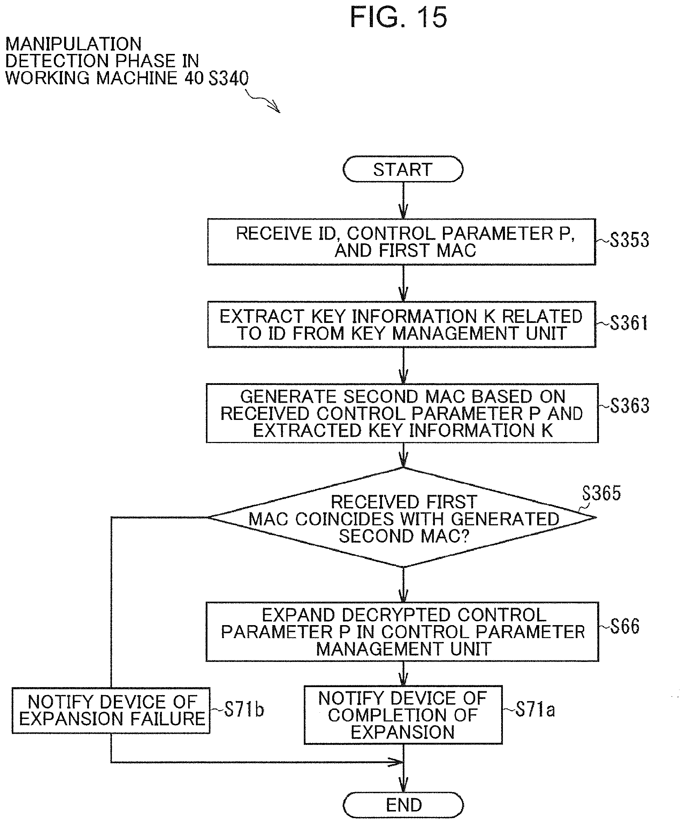

When the first MAC coincides with the second MAC (YES in Step S365 illustrated in FIG. 15), the working machine 40 illustrated in FIG. 12 expands the control parameter P in a control parameter management unit 57 (Step S66 illustrated in FIG. 15). In this way, the operation of the working machine 40 illustrated in FIG. 12 is controlled based on the control parameter P. Then, the determination unit 356 in the working machine 40 transmits information to the device 20 which indicates that the control parameter P has been completely expanded (Step S71a illustrated in FIG. 15).

When the first MAC does not coincide with the second MAC (NO in Step S365), the determination unit 356 illustrated in FIG. 12 notifies the device 20 that the expansion has failed (Step S71b illustrated in FIG. 15). In this case, the working machine 40 illustrated in FIG. 12 does not expand the received control parameter P in the control parameter management unit 57. As described above, only when the first MAC coincides with the second MAC, the control parameter P is expanded in the control parameter management unit 57. In this way, a control parameter P that is not manipulated is expanded in the working machine 40, and a control parameter P related to a worker who uses the working machine 40 (specifically, related to the ID) is expanded in the working machine 40. This can suppress the control parameter P expanded in the working machine 40 from differing from a control parameter P expected by the worker.

### (Problem Possibly Arising When Manipulation of Information Is Not Detected)

If manipulation of information is not detected, there is a risk that information manipulated by a third party is received by the working machine 40 and is used by the working machine 40.

For example, if a control parameter P manipulated by a third party is received by the working machine 40 and expanded in the working machine 40, the working machine 40 may perform an operation that is not expected by a worker or may fail to operate. However, the information processing system 301 can control these problems by detecting manipulation of the control parameter P.

The contents of the second embodiment are summarized in the following manner.

In the information processing system 1 according to the second embodiment, one of the external device 10 and the working machine 40 illustrated in FIG. 13 corresponds to a transmission-side apparatus that transmits information, and the other corresponds to a reception-side apparatus that receives information. The transmission-side apparatus (e.g., the external device 10) generates a first MAC (first authentication code) based on key information K identical to key information K stored in the reception-side apparatus (e.g., the working machine 40) and information (Step S351). The reception-side apparatus (e.g., the working machine 40) receives the information and the first MAC from the transmission-side apparatus (e.g., the external device 10) and then generates a second MAC (second authentication code) based on the received information and the key information K stored in the reception-side apparatus (Step S363). The reception-side apparatus (e.g., the working machine 40) compares the first MAC with the second MAC (Step S365).

The above configuration compares the first MAC with the second MAC, thereby successfully detecting whether the information used to generate the first MAC coincides with the information used to generate the second MAC (whether manipulation is performed). More specifically, when the first MAC coincides with the second MAC, information transmitted by the transmission-side apparatus (e.g., the external device 10) coincides with information received by the reception-side apparatus (e.g., the working machine 40). In this way, it is possible to confirm that the information is not manipulated. When the first MAC does not coincide with the second MAC, the information transmitted by the transmission-side apparatus (e.g., the external device 10) differs from the information received by the reception-side apparatus (e.g., the working machine 40). In this way, manipulation of information can be detected. As a result, it is possible to suppress the external device 10 or the working machine 40 from operating based on information manipulated by a third party.

Furthermore, in the information processing system 1, the external device 10 generates a first MAC (first authentication code) based on key information K received from the working machine 40 and a control parameter P (Step S351). The working machine 40 receives the control parameter P and the first MAC from the external device 10 (Step S353). The working machine 40 generates a second MAC (second authentication code) based on the received control parameter P and key information K stored in the working machine 40 (Step S363). The working machine 40 compares the first MAC with the second MAC (Step S365).

The above configuration compares the first MAC with the second MAC, thereby successfully detecting whether the control parameter P used to generate the first MAC coincides with the control parameter P used to generate the second MAC (whether manipulation is performed). As a result, it may be possible to obtain the following effects. It is possible to prevent a third party from manipulating and transmitting a control parameter P to the working machine 40, and prevent the working machine 40 from expanding this manipulated control parameter P. This can suppress the working machine 40 from performing an operation that is not expected by a worker, or from failing to operate.

Furthermore, conditions for controlling the operation of the working machine 40 in the information processing system 1 based on the control parameter P includes a condition in which the first MAC coincides with the second MAC.

The above configuration can guarantee that the control parameter P to be used to control the operation of the working machine 40 is not manipulated.

Furthermore, in the information processing method according to the second embodiment, one of the external device 10 and the working machine 40 corresponds to a transmission-side apparatus that transmits information, and the other corresponds to a reception-side apparatus that receives information. The information processing method includes the following steps (a18) and (b18).

(a18) The transmission-side apparatus (e.g., the external device 10) generates a first MAC (first authentication code) based on key information K identical to key information K stored in the reception-side apparatus (e.g., the working machine 40) and information (Step S351). (b18) The reception-side apparatus receives the information and the first MAC from the transmission-side apparatus, then generates a second MAC (second authentication code) based on the received information and key information K stored in the reception-side apparatus (Step S363), and compares the first MAC with the second MAC (Step S365).

With this configuration, the same effects as those described in the information processing system 1 can be obtained.

In the program according to the second embodiment, one of the external device 10 and the working machine 40 corresponds to a transmission-side apparatus that transmits information, and the other corresponds to a reception-side apparatus that receives information. The program includes the above steps (a18) and (b18).

With this configuration, the same effects as those described in the information processing system 1 can be obtained.

### (Fourth Embodiment)

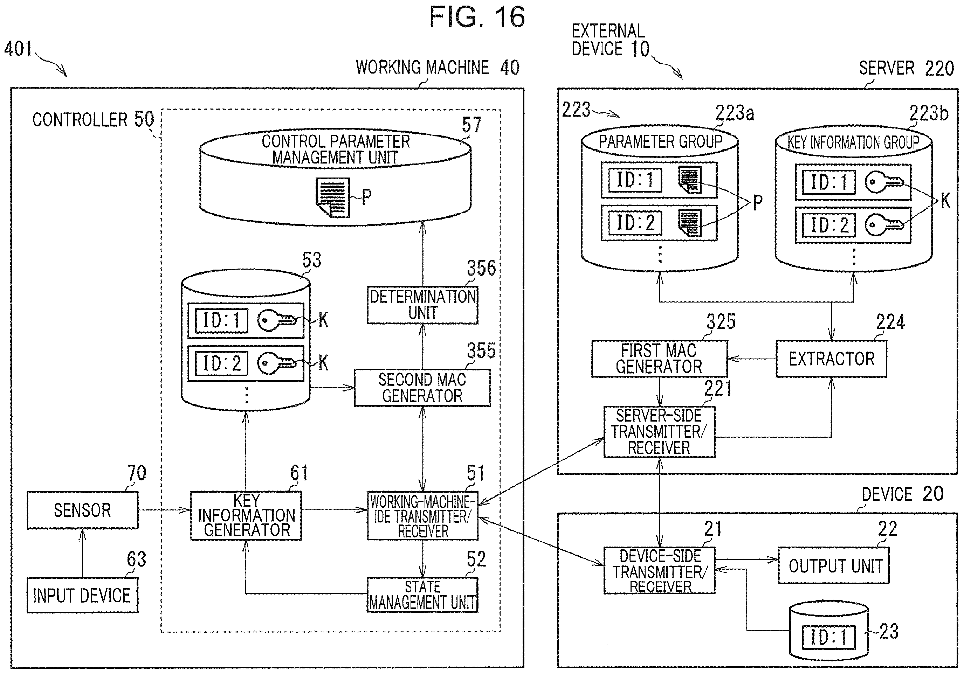

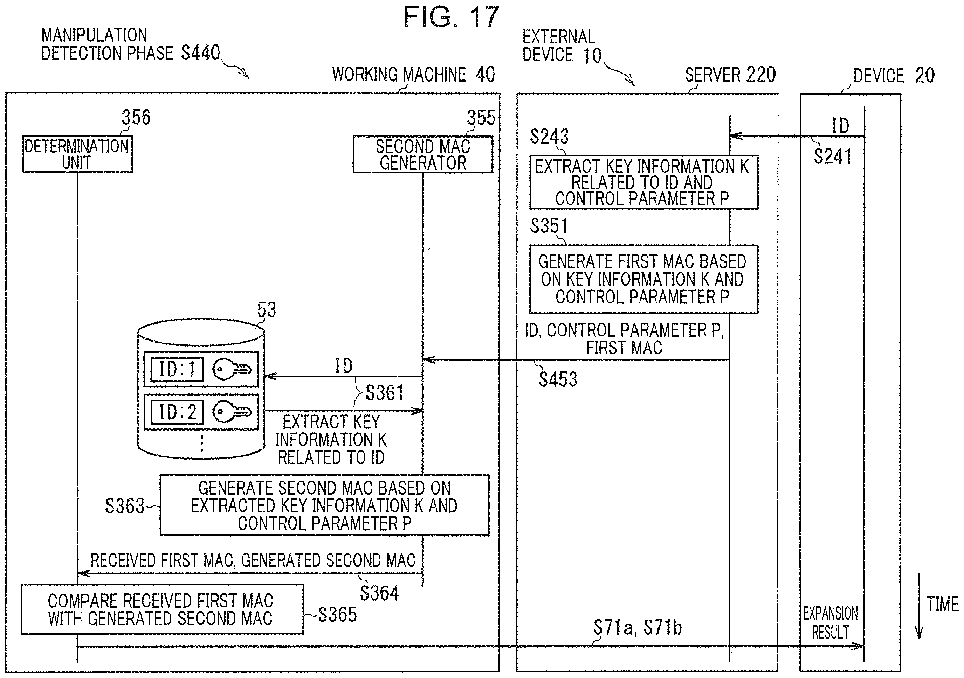

With reference to FIGS. 16 and 17, a description will be given of an information processing system 401 (see FIG. 16), an information processing method, and a program according to a fourth embodiment. Further, differences from those according to the second and third embodiments will also be described.

As illustrated in FIG. 16, an external device 10 includes a device 20 and a server 220 (similar to the second embodiment). The configuration of the server 220 is substantially the same as that of the server 220 (see FIG. 10) in the second embodiment. As illustrated in FIG. 16, the server 220 includes a first MAC generator 325 and may not include the encryption unit 25 (see FIG. 10), similar to the device 20 (see FIG. 12) in the third embodiment. A configuration of a working machine 40 is the same as that of the working machine 40 (see FIG. 12) in the third embodiment.

### (Operation)

A description will be given mainly of differences in operation (information processing method and program) between an information processing system 401 (see FIG. 16) in this embodiment and each of the information processing system 201 (see FIG. 10) in the second embodiment and the information processing system 301 (see FIG. 12) in the third embodiment. A key information generation phase S10 (see FIG. 4) is performed in the same manner as in the second embodiment.

### (Manipulation Detection Phase S440)

In the third exemplary embodiment, as illustrated in FIG. 12, the first MAC generator 325 in the device 20 generates a first MAC. In this embodiment, as illustrated in FIG. 16, the first MAC generator 325 in the server 220 generates a first MAC. Regarding a manipulation detection phase S440 illustrated in FIG. 17, details of the difference from the second embodiment and the third embodiment are as follows. As in the second embodiment, the device 20 transmits an ID to an extractor 224 (see FIG. 16) in the server 220 (Step S241). As in the second embodiment, the extractor 224 illustrated in FIG. 16 extracts, from a retainer 223a, a control parameter P related to the ID received from the device 20. Then, the extractor 224 extracts, from a retainer 223b, key information K related to the ID received from the device 20 (Step S243 illustrated in FIG. 17).

The first MAC generator 325 generates a first MAC based on extracted key information K and extracted control parameter P (Step S351 illustrated in FIG. 17). In this case, if the extractor 224 fails to find a control parameter P and key information K related to the ID received from the device 20, the first MAC generator 325 does not generate the first MAC. As illustrated in FIG. 17, the server 220 transmits the ID, the control parameter P, and the first MAC to the working machine 40 (e.g., a second MAC generator 355) (Step S453). Processes performed after Step S453 are the same as in the third embodiment.

### (Fifth Embodiment)

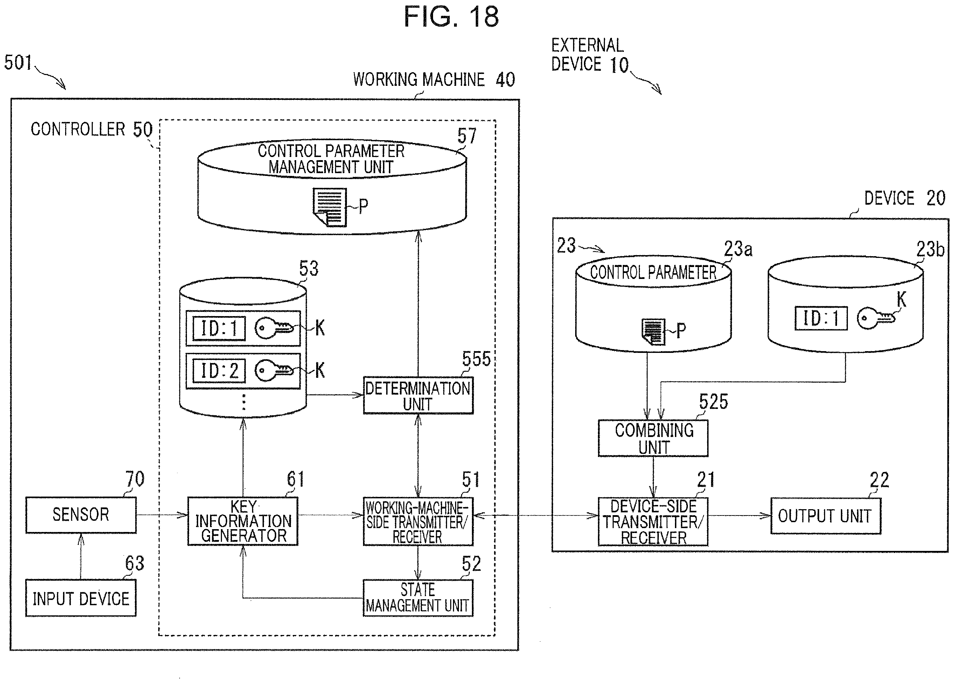

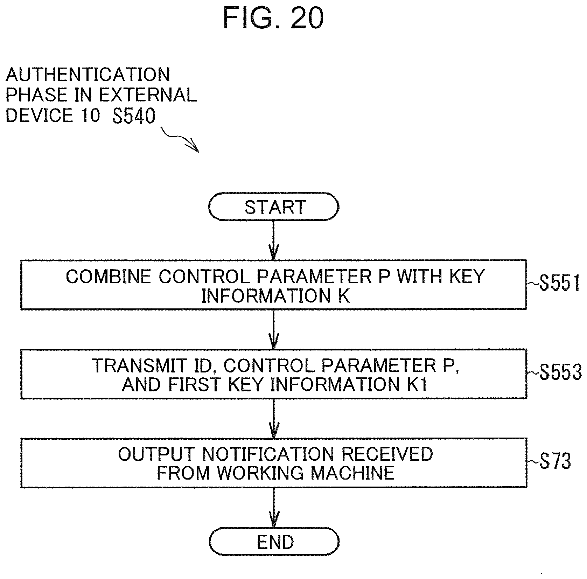

With reference to FIGS. 18 to 21, a description will be given of an information processing system 501, an information processing method, and a program according to a fifth embodiment. Further, differences from those according to the first embodiment will also be described. The information processing system 1 (see FIG. 1) in the first embodiment serves as an information encryption system. On the other hand, the information processing system 501 in this embodiment serves as an information user authentication system (impersonation detection system) that detects whether information received by a working machine 40 illustrated in FIG. 18 is information transmitted by an authorized external device 10 (authorized device 20).

The device 20 includes a combining unit 525 (information combining device). The combining unit 525 combines key information K with other information (e.g., control parameter P). Details of this process will be described later. The combining unit 525 is preferably mounted on a part having as high tamper resistance as possible. The device 20 may not include the encryption unit 25 (see FIG. 1).

The working machine 40 includes a determination unit 555 (information determination device). The determination unit 555 determines whether information received by the working machine 40 is information transmitted from the authorized device 20 (whether the information is transmitted by a third party or whether impersonation is performed). Details of this determination method will be described later. The working machine 40 may not include the decryption unit 55 (see FIG. 1).

### (Operation)

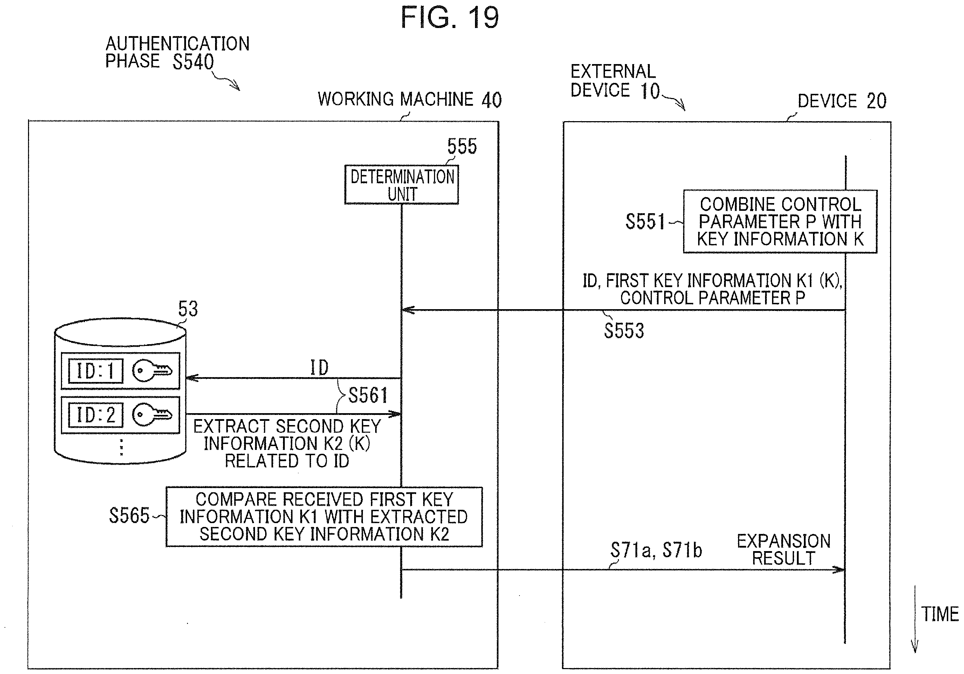

An outline of an operation (an information processing method and a program) of the information processing system 501 is as follows. An operation of the information processing system 501 includes a key information generation phase S10 (see FIG. 4) that is the same as in the first embodiment and an authentication phase S540 (see FIGS. 19, 20, and 21).

### (Authentication Phase S540)

An authentication phase S540 illustrated in FIG. 19 is a phase in which an information user is authenticated. An outline of the authentication phase S540 is as follows. The external device 10 transmits the control parameter P to the working machine 40 by using the key information K. More specifically, the device 20 combines the key information K with the control parameter P (Step S551). Then, the device 20 transmits the combined key information K (first key information K1) and control parameter P to the working machine 40 (Step S553). The working machine 40 determines whether the key information K (first key information K1) received from the device 20 coincides with the key information K (second key information K2) that has been retained in the working machine 40 before this reception (Step S565). The working machine 40 can confirm that the control parameter P is transmitted from the authorized device 20 by checking coincidence of the first key information K1 with the second key information K2. In this way, it is possible to confirm whether the control parameter P received by the working machine 40 is a control parameter P expected by a worker. Details of the authentication phase S540 are as follows.

The combining unit 525 (see FIG. 18) in the device 20 combines the key information K with the control parameter P (Step S551). More specifically, the combining unit 525 illustrated in FIG. 18 combines the key information K retained in a retainer 23b of the device 20 (the key information K received from the working machine 40) with the control parameter P retained in a retainer 23a of the device 20. Specifically, for example, the combining unit 525 attaches (additionally writes) the key information K to a specific portion (e.g., a head or tail of the data) of data of the control parameter P. Where the "specific portion" is located is set (shared) by the working machine 40 and the device 20. As illustrated in FIG. 19, the device 20 transmits an ID, the control parameter P, and the key information K (first key information K1) to the working machine 40 (Step S553). In this case, the device 20 may transmit the ID to the working machine 40 before combining the control parameter P with the key information K.

The determination unit 555 in the working machine 40 extracts, from a key information management unit 53, key information K (second key information K2) related to the ID received from the device 20 (Step S561). The second key information K2 is key information K that has been stored in the working machine 40 before the working machine 40 receives the first key information K1. The second key information K2 corresponds to the key information K that is generated in a key information generator 61 (Step S23) and then is stored in the key information management unit 53 (Step S25) during the key information generation phase S10 illustrated in FIG. 4. As illustrated in FIG. 19, the determination unit 555 compares the first key information K1 with the second key information K2 (Step S565) and then determines whether the first key information K1 coincides with the second key information K2.

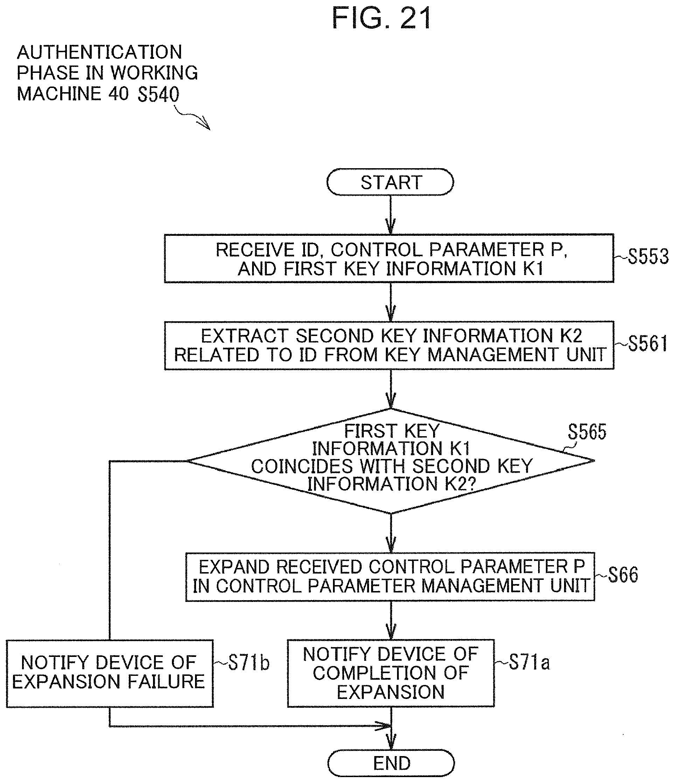

When the first key information K1 coincides with the second key information K2 (YES in Step S565 illustrated in FIG. 21), the working machine 40 illustrated in FIG. 18 expands the control parameter P in a control parameter management unit 57 (Step S66 illustrated in FIG. 21). In this way, the operation of the working machine 40 illustrated in FIG. 18 is controlled based on the control parameter P. Then, the determination unit 555 in the working machine 40 transmits information to the device 20 which indicates that the control parameter P has been completely expanded (Step S71a illustrated in FIG. 21).

When the first key information K1 does not coincide with the second key information K2 (NO in Step S565), the determination unit 555 illustrated in FIG. 18 notifies the device 20 that the expansion has failed (Step S71b illustrated in FIG. 21). In this case, the working machine 40 illustrated in FIG. 18 does not expand the received control parameter P in the control parameter management unit 57. As described above, only when the first key information K1 coincides with the second key information K2, the control parameter P is expanded in the control parameter management unit 57. In this way, the control parameter P transmitted from the authorized device 20 is expanded. The control parameter P related to a worker who uses the working machine 40 (specifically, related to the ID) is expanded. This can suppress the control parameter P expanded in the working machine 40 from differing from a control parameter P expected by the worker.

### (Problem Possibly Arising When Information User Is Not Authenticated)

If an information user is not authenticated, there is a risk that information transmitted by a third party is received by the working machine 40 and is used by the working machine 40. For example, if a control parameter P transmitted by a third party is received by the working machine 40 and expanded in the working machine 40, the working machine 40 may perform an operation that is not expected by a worker or may fail to operate. However, the information processing system 501 can control these problems by authenticating the information user.

The contents of the fifth embodiment are summarized as follows.

In the information processing system 1, one of the external device 10 and the working machine 40 illustrated in FIG. 19 corresponds to a transmission-side apparatus that transmits information, and the other corresponds to a reception-side apparatus that receives information.
The transmission-side apparatus (e.g., the external device 10) combines key information K identical to key information K stored in the reception-side apparatus (e.g., the working machine 40) with information (Step S551). The reception-side apparatus (e.g., the working machine 40) receives the combined key information K (the first key information K1) and information from the transmission-side apparatus (e.g., the external device 10) (Step S553). The reception-side apparatus (e.g., the working machine 40) compares the received first key information K1 with the second key information K2 that has been stored in the reception-side apparatus before the reception-side apparatus receives the first key information K1 (Step S565).

This configuration compares the first key information K1 with the second key information K2. In this way, it is possible to detect whether a device that has transmitted the first key information K1 to the reception-side apparatus coincides with an authorized transmission-side apparatus (e.g., the external device 10) that retains a key information K identical to the second key information K2 stored in the reception-side apparatus (e.g., the working machine 40). As a result, it is detected that no impersonation is performed. More specifically, when the first key information K1 coincides with the second key information K2, it is possible to confirm that an apparatus that has transmitted the first key information K1 to the reception-side apparatus (e.g., the working machine 40) coincides with the authorized transmission-side apparatus. As a result, it is confirmed that no impersonation is performed. When the first key information K1 does not coincide with the second key information K2, it is possible to detect that an apparatus that has transmitted the first key information K1 to the working machine 40 does not coincide with the authorized transmission-side apparatus. In this way, impersonation is detected. As a result, it is possible to suppress the external device 10 or the working machine 40 from operating based on unauthorized information transmitted by a third party.

In the information processing system 1, the external device 10 combines the key information K received from the working machine 40 with the control parameter P (Step S551). The working machine 40 receives the combined key information K (first key information K1) and control parameter P from the external device 10. The working machine 40 compares the received first key information K1 with the second key information K2 that has been stored in the working machine 40 before the working machine 40 receives the first key information K1 (Step S565).

The above configuration compares the first key information K1 with the second key information K2, thereby successfully detecting whether a device that has transmitted the control parameter P and the first key information K1 to the working machine 40 coincides with the external device 10 to which the working machine 40 has transmitted the key information K in advance. As a result, it may be possible to obtain the following effects. It is possible to prevent a third party from transmitting an unauthorized control parameter P to the working machine 40 and the working machine 40 from expanding this unauthorized control parameter P. This can suppress the working machine 40 from performing an operation that is not expected by a worker, or from failing to operate.

In the information processing system 1, conditions for controlling the operation of the working machine 40 based on the control parameter P include a condition in which the first key information K1 received by the working machine 40 coincides with the second key information K2 that has been stored in the working machine 40 before the working machine 40 receives the first key information K1.

The above configuration guarantees that the control parameter P used to control the operation of the working machine 40 is information transmitted by the authorized external device 10 (the external device 10 to which the working machine 40 has transmitted the key information K in advance), that is, that no impersonation is performed.

In the information processing method according to the fifth embodiment, one of the external device 10 and the working machine 40 corresponds to a transmission-side apparatus that transmits information, and the other corresponds to a reception-side apparatus that receives information.

The information processing method includes the following steps (a19) and (b19).

(a19) The transmission-side apparatus (e.g., the external device 10) combines key information K identical to second key information K2 stored in the reception-side apparatus (e.g., the working machine 40) with information (Step S551). (b19) The reception-side apparatus (e.g., the working machine 40) receives the combined key information K (the first key information K1) and information from the transmission-side apparatus (e.g., the external device 10) (Step S553). Furthermore, the reception-side apparatus (e.g., the working machine 40) compares the received first key information K1 with the second key information K2 that has been stored in the reception-side apparatus before the reception-side apparatus receives the first key information K1 (Step S565).

With this configuration, the same effects as those described in the information processing system 1 can be obtained.

In the program according to the fifth embodiment, one of the external device 10 and the working machine 40 corresponds to a transmission-side apparatus that transmits information, and the other corresponds to a reception-side apparatus that receives information. The program includes the above steps (a19) and (b19).

With this configuration, the same effects as those described in the information processing system 1 can be obtained.

### (Sixth Embodiment)

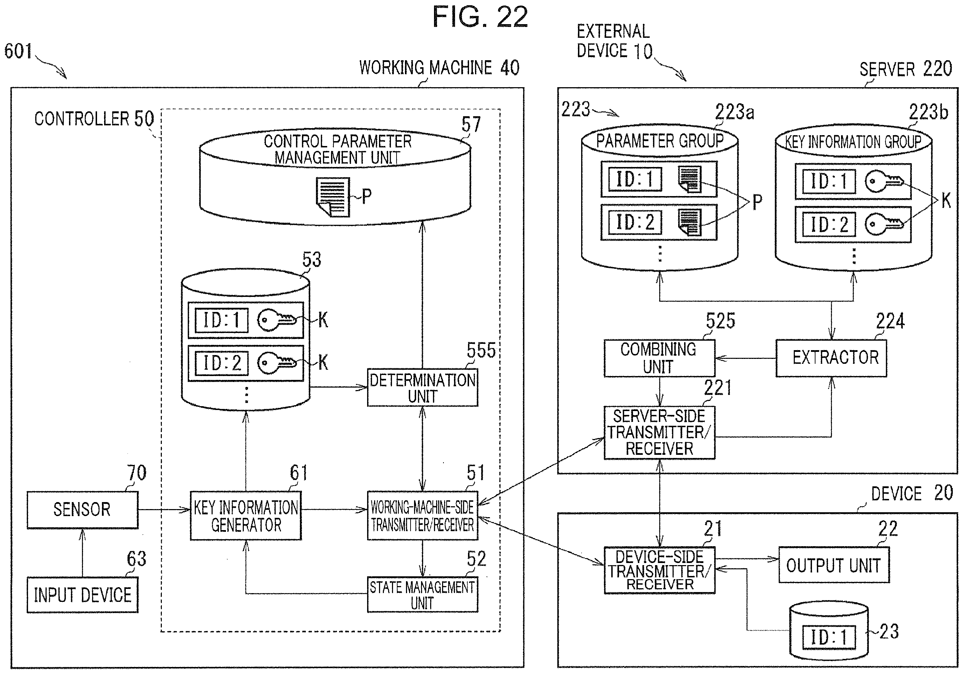

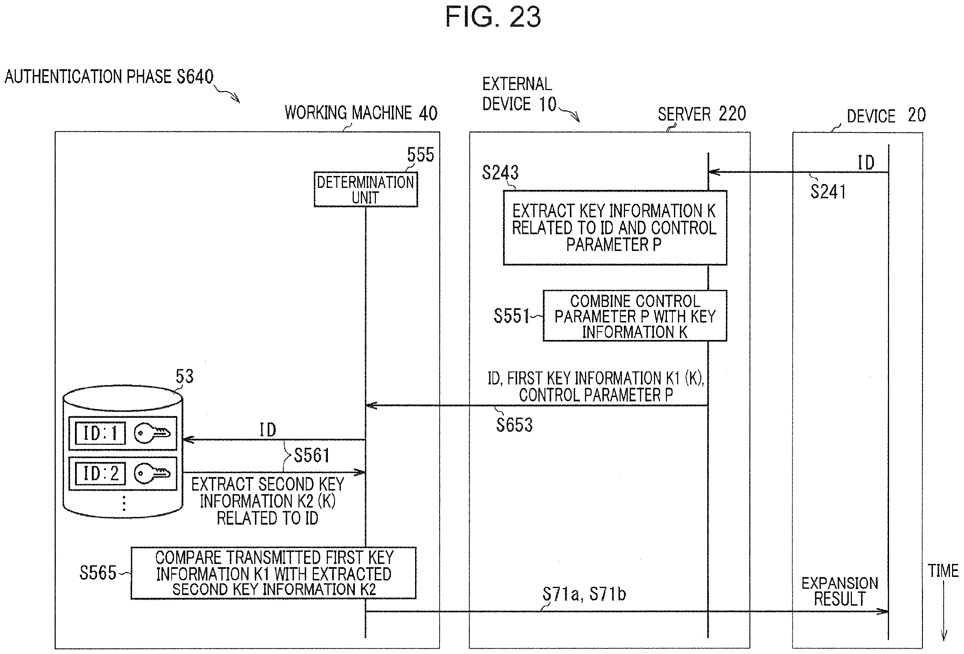

With reference to FIGS. 22 and 23, a description will be given of an information processing system 601 (see FIG. 22), an information processing method, and a program according to a sixth embodiment. Further, differences from those according to the second and fifth embodiments will also be described.

As illustrated in FIG. 22, an external device 10 includes a device 20 and a server 220, similar to the second embodiment. The configuration of the server 220 is substantially the same as that of the server 220 (see FIG. 10) in the second embodiment. As illustrated in FIG. 22, the server 220 may include a combining unit 525 and may not include an encryption unit 25 (see FIG. 10), similar to the device 20 (see FIG. 18) in the fifth embodiment. A configuration of a working machine 40 is the same as that of the working machine 40 (see FIG. 18) in the fifth embodiment.

### (Operation)

A description will be given mainly of differences in operation (information processing method and program) between an information processing system 601 and each of the information processing system 201 (see FIG. 10) in the second embodiment and the information processing system 501 (see FIG. 18) in the fifth embodiment. A key information generation phase S10 (see FIG. 4) is performed in the same manner as in the second embodiment.

### (Authentication Phase S640)

In the fifth embodiment, as illustrated in FIG. 18, the combining unit 525 in the device 20 combines a control parameter P and key information K. In this embodiment, as illustrated in FIG. 22, the combining unit 525 in the server 220 combines the control parameter P with the key information K. Regarding an authentication phase S640 illustrated in FIG. 23, details of the difference from the second embodiment and the fifth embodiment are as follows. As in the second embodiment, the device 20 transmits an ID to an extractor 224 (see FIG. 22) in the server 220 (Step S241). As in the second embodiment, the extractor 224 illustrated in FIG. 22 extracts, from a retainer 223a, a control parameter P related to the ID received from the device 20. Then, the extractor 224 extracts, from a retainer 223b, key information K related to the ID received from the device 20 (Step S243 illustrated in FIG. 23). The combining unit 525 in the server 220 combines the extracted key information K with the extracted control parameter P (Step S551 illustrated in FIG. 23). In this case, if the extractor 224 fails to find a control parameter P and key information K related to the ID received from the device 20, the combining unit 525 does not combine the control parameter P with the key information K. As illustrated in FIG. 23, the server 220 transmits the ID, the first key information K1, and the control parameter P to the working machine 40 (e.g., the determination unit 555) (Step S653). Processing after Step S653 is similar to that in the fifth embodiment.

### (Seventh Embodiment)

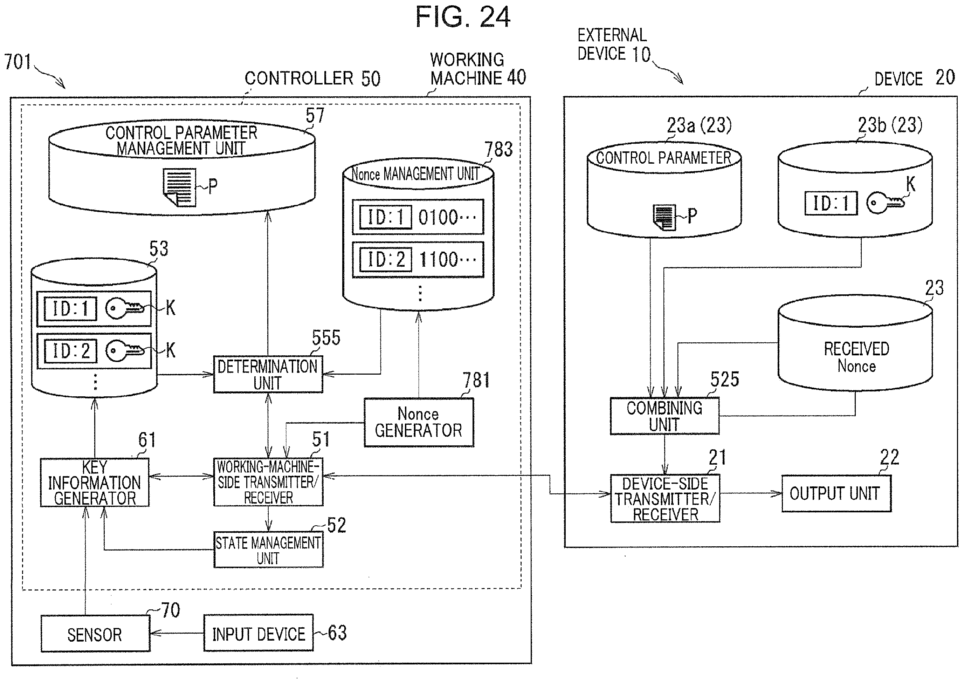

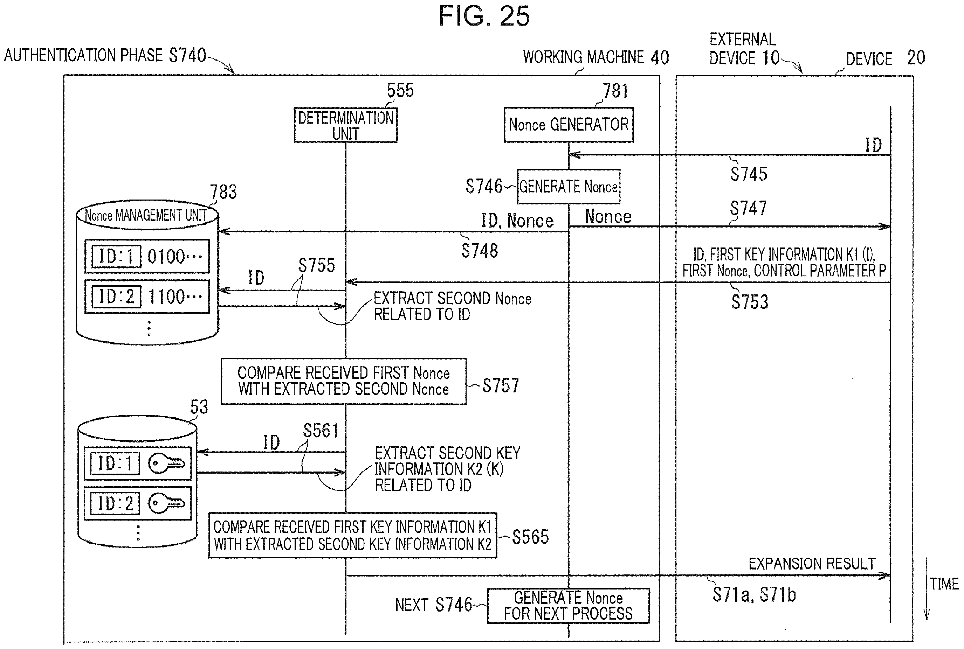

With reference to FIGS. 24 and 25, a description will be given of an information processing system 701, an information processing method, and a program according to a seventh embodiment. Further, differences from that according to the fifth embodiment will also be described.

A working machine 40 in the information processing system 701 includes a Nonce generator 781 that generates a number used once (Nonce) and a Nonce management unit 783. The Nonce management unit 783 retains (stores) a plurality of IDs and Nonces related to these IDs in association with each other. The Nonce management unit 783 is preferably mounted on a part having as high tamper resistance as possible.

### (Operation)

A description will be given mainly of differences in operation (information processing method and program) between the information processing system 701 (see FIG. 24) in this embodiment and the information processing system 501 (see FIG. 18) in the fifth embodiment. A key information generation phase S10 (see FIG. 4) is performed in the same manner as in the first embodiment.

### (Authentication Phase S740)

In an authentication phase S740 illustrated in FIG. 25, a Nonce is generated and determined in addition to the authentication phase S540 in the fifth embodiment (see FIG. 19). An outline of the difference between the authentication phase S740 in this embodiment and the authentication phase S540 in the fifth embodiment (see FIG. 19) is as follows. The working machine 40 transmits a Nonce to a device 20 (Step S747). The device 20 transmits, to the working machine 40, the Nonce (also referred to as the first Nonce) received from the working machine 40, together with a control parameter P (Step S753). The working machine 40 determines whether the first Nonce received from the device 20 coincides with a Nonce (also referred to as a second Nonce) that has been retained in the working machine 40 before this reception (Step S757). The working machine 40 can confirm that the control parameter P is transmitted from the authorized device 20 by checking coincidence of the first Nonce with the second Nonce. In this way, it is possible to confirm whether the control parameter P received by the working machine 40 is a control parameter P expected by a worker. Details of the difference between the authentication phase S740 in this embodiment and the authentication phase S540 in the fifth embodiment (see FIG. 19) are as follows.

The device 20 transmits an ID to the Nonce generator 781 in the working machine 40 (Step S745). The Nonce generator 781 generates a Nonce (Step S746). The Nonce is a disposable random value and may be a random number, a sequence number, or a current time, for example. The Nonce generator 781 transmits the generated Nonce to the device 20 (Step S747). The Nonce generator 781 transmits the ID received from the device 20 and the generated Nonce to the Nonce management unit 783 (Step S748). The Nonce management unit 783 retains the ID and the Nonce in association with each other.

The device 20 retains, in the retainer 23 (see FIG. 24), the Nonce (refer to Step S747) received from the working machine 40. As in the fifth embodiment, the device 20 transmits the ID, a control parameter P, and key information K to a determination unit 555 in the working machine 40 (Step S753). Furthermore, the device 20 transmits the Nonce (first Nonce) to the working machine 40 (e.g., the determination unit 555) (Step S753). In this case, the device 20 may transmit the Nonce (see Step S747) received from the working machine 40 to the working machine 40 without performing any process. Alternatively, the device 20 may transmit the Nonce converted with a predetermined function (e.g., similar to [Example 2C] described above) to the working machine 40.

The determination unit 555 extracts, from the Nonce management unit 783, a Nonce (second Nonce) related to the received ID (Step S755). The second Nonce is a Nonce that has been stored in the working machine 40 before the working machine 40 receives the first Nonce. The determination unit 555 compares the first Nonce with the second Nonce (Step S757) and then determines whether the first Nonce coincides with the second Nonce.

If the device 20 transmits the Nonce converted with the predetermined function (first Nonce after conversion) to the working machine 40 (Step S753), the working machine 40 performs the following process, for example. In this case, the working machine 40 converts the Nonce (refer to Step S746) generated by the Nonce generator 781 with a predetermined function, to generate a converted second Nonce. Then, the determination unit 555 may compare the converted first Nonce with the converted second Nonce (Step S757). In addition, the working machine 40 converts the converted first Nonce received from the device 20, with an inverse function of the function that the device 20 has used for conversion, to generate the first Nonce. Then, the determination unit 555 may compare the first Nonce with the second Nonce (Step S757).

When the first Nonce coincides with the second Nonce, the determination unit 555 extracts a second key information K2 related to the ID (Step S561) and then compares the first key information K1 with the second key information K2 (Step S565), as in the fifth embodiment.
After that (e.g., after steps S71a and S71b), the Nonce generator 781 generates a Nonce to be used for the next process (next Step S746).

When the first Nonce does not coincide with the second Nonce, the determination unit 555 does not compare the first key information K1 with the second key information K2 (Step S565).

In this case, for example, the working machine 40 may transmit the determination result to the device 20. Then, the device 20 may cause the output unit 22 (see FIG. 24) to output the determination result (authentication failure). As described above, only when the first Nonce coincides with the second Nonce, the first key information K1 may be compared with the second key information K2 (Step S565), and the control parameter P may be expanded in a control parameter management unit 57 illustrated in FIG. 24. Specifically, for example, even if the control parameter P that has been used in the past is transmitted to the working machine 40, the control parameter P is not expanded in the working machine 40 because the first Nonce does not coincide with the second Nonce. This can suppress replay attack. Therefore, the control parameter P transmitted from the authorized external device 10 is expanded in the working machine 40. The control parameter P related to a worker who uses the working machine 40 (specifically, related to the ID) is expanded. This can suppress the control parameter P expanded in the working machine 40 from differing from a control parameter P expected by the worker.

### (Modification)

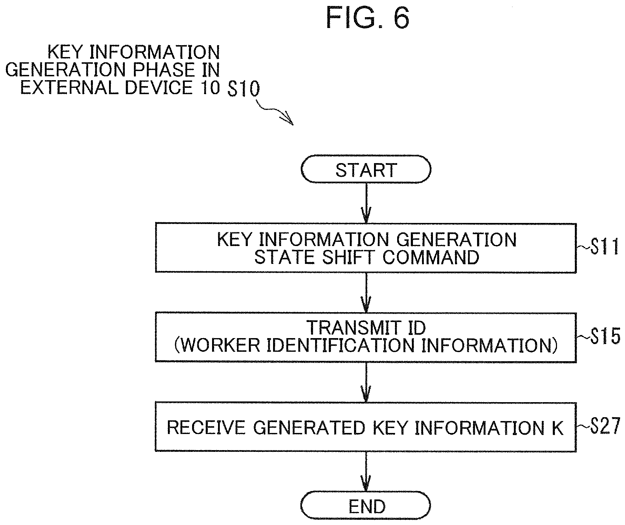

The above embodiments may be modified in various ways. For example, components of mutually different embodiments may be combined together. For example, the connection between components in a block diagram (e.g., see FIG. 1) may be changed. For example, the sequence of the steps in a sequence diagram (e.g., see FIG. 4) or a flowchart (e.g., see FIG. 6) may be changed. Some of the steps may be skipped. Steps in mutually different sequence diagrams and flowcharts may be combined and performed. For example, the number of components may be changed; some of the components may be omitted. For example, a plurality of mutually different components described above may be implemented by a single part. For example, a single part described above may be implemented by a plurality of different parts disposed separately.

For example, the information encryption process (first and second embodiments), the manipulation detection process (third and fourth embodiments), and the user authentication process (fifth to seventh embodiments) may be combined together. Furthermore, for example, Nonces (refer to the seventh embodiment) may be used in a configuration including the server 220 (second, fourth, and sixth embodiments).

For example, the components of the server 220 may be provided separately in a plurality of servers. Some of the components of the server 220 may be provided in the device 20.

Key information K generated by the key information generator 61 can be used in various ways. For example, key information K generated by the key information generator 61 is used to transmit and receive a control parameter P in the above embodiments; however, the key information K may be used to transmit and receive information other than the control parameter P. Furthermore, key information K generated by the key information generator 61 is also used as key information K according to a common key scheme in the above embodiments; however the key information K may be used as key information K according to a public key scheme.

## Claims

1. An information processing system comprising:
a sensor provided in a working machine; and
a key information generator that generates key information based on one or more sensor values received from the sensor, the key information generator being provided in the working machine,
the key information being used to transmit and receive information between the working machine and an external device provided outside the working machine.

2. The information processing system according to claim 1, wherein the sensor values include at least one of an amount of fuel discharged from an injector of an engine in the working machine, a rotation speed of the engine, a temperature of cooling water in the engine, a pressure of a pump in the working machine, a temperature of hydraulic oil in the working machine, and a current in a proportional valve of the working machine.

3. The information processing system according to claim 1 or 2, wherein
the sensor detects an operation of an input device operated by an operator of the working machine, and
the sensor values include at least one of switch-on or off of a button on an operation panel of the working machine, at least one of a current and pressure varying in response to an operation of an operation lever in the working machine, and turn-on or off of a lever lock in the working machine.

4. The information processing system according to any one of claims 1 to 3, wherein the key information generator sets the key information to a bit string generated based on the sensor values.

5. The information processing system according to claim 4, wherein the key information generator sets the key information to the bit string generated based on the sensor values being time-varying within a predetermined time.

6. The information processing system according to any one of claims 1 to 5, wherein
one of the external device and the working machine is a transmission-side apparatus that transmits the information, and the other is a reception-side apparatus that receives the information,
the transmission-side apparatus encrypts the information with the key information identical to the key information stored in the reception-side apparatus, and
the reception-side apparatus decrypts the encrypted information received from the transmission-side apparatus with the key information stored in the reception-side apparatus.

7. The information processing system according to any one of claims 1 to 6, wherein
one of the external device and the working machine is a transmission-side apparatus that transmits the information, and the other is a reception-side apparatus that receives the information,
the transmission-side apparatus generates a first authentication code based on the key information identical to the key information stored in the reception-side apparatus and the information, and
the reception-side apparatus receives the information and the first authentication code from the transmission-side apparatus, generates a second authentication code based on the received information and the key information stored in the reception-side apparatus, and compares the first authentication code with the second authentication code.

8. The information processing system according to any one of claims 1 to 7, wherein
one of the external device and the working machine is a transmission-side apparatus that transmits the information, and the other is a reception-side apparatus that receives the information,
the transmission-side apparatus combines the key information identical to the key information stored in the reception-side apparatus with the information, and
the reception-side apparatus receives the combined key information and information from the transmission-side apparatus, and compares the received key information with the key information that has been stored in the reception-side apparatus before the reception-side apparatus receives the key information.

9. The information processing system according to any one of claims 1 to 5, wherein
the information is a control parameter for use in controlling an operation of the working machine, and
the external device transmits the control parameter to the working machine by using the key information, and
the working machine determines, based on the key information, whether to control the operation of the working machine based on the control parameter.

10. The information processing system according to claim 9, wherein
the external device encrypts the control parameter with the key information received from the working machine, and
the working machine decrypts the encrypted control parameter received from the external device with the key information stored in the working machine.

11. The information processing system according to claim 10, wherein conditions for controlling the operation of the working machine based on the control parameter include a condition in which the control parameter has been decrypted correctly with the key information.

12. The information processing system according to any one of claims 9 to 11, wherein
the external device generates a first authentication code based on the key information received from the working machine and the control parameter, and
the working machine receives the control parameter and the first authentication code from the external device, generates a second authentication code based on the received control parameter and the key information stored in the working machine, and compares the first authentication code with the second authentication code.

13. The information processing system according to claim 12, wherein the conditions for controlling the operation of the working machine based on the control parameter include a condition in which the first authentication code coincides with the second authentication code.

14. The information processing system according to any one of claims 9 to 13, wherein
the external device combines the key information received from the working machine with the control parameter, and
the working machine receives the combined key information and control parameter from the external device, and compares the received key information with the key information that has been stored in the working machine before the working machine receives the key information.

15. The information processing system according to claim 14, wherein the conditions for controlling the operation of the working machine based on the control parameter include a condition in which the key information received by the working machine coincides with the key information that has been stored in the working machine before the working machine receives the key information.

16. An information processing method comprising the step of generating key information based on a sensor value received from a sensor provided in a working machine,
the key information being used to transmit and receive information between the working machine and an external device provided outside the working machine.

17. The information processing method according to claim 16, wherein
one of the external device and the working machine is a transmission-side apparatus that transmits the information, and the other is a reception-side apparatus that receives the information, and
the information processing method further comprises the steps of:
causing the transmission-side apparatus to encrypt the information with the key information identical to the key information stored in the reception-side apparatus; and
causing the reception-side apparatus to decrypt the encrypted information received from the transmission-side apparatus with the key information stored in the reception-side apparatus.

18. The information processing method according to claim 16 or 17, wherein
one of the external device and the working machine is a transmission-side apparatus that transmits the information, and the other is a reception-side apparatus that receives the information, and
the information processing method further comprises the steps of:
causing the transmission-side apparatus to generate a first authentication code based on the key information identical to the key information stored in the reception-side apparatus and the information; and
causing the reception-side apparatus to receive the information and the first authentication code from the transmission-side apparatus, to generate a second authentication code based on the received information and the key information stored in the reception-side apparatus, and to compare the first authentication code with the second authentication code.

19. The information processing method according to any one of claims 16 to 18, wherein
one of the external device and the working machine is a transmission-side apparatus that transmits the information, and the other is a reception-side apparatus that receives the information, and
the information processing method further comprises the steps of:
causing the transmission-side apparatus to combine the key information identical to the key information stored in the reception-side apparatus with the information; and
causing the reception-side apparatus to receive the combined key information and information from the transmission-side apparatus, and to compare the received key information with the key information that has been stored in the reception-side apparatus before the reception-side apparatus receives the key information.

20. The information processing method according to any one of claims 16 to 19, wherein
the information is a control parameter for use in controlling an operation of the working machine, and
the information processing method further comprises the steps of:
causing the external device to transmit the control parameter to the working machine by using the key information; and
causing the working machine to determine, based on the key information, whether to control the operation of the working machine based on the control parameter.

21. A program causing a computer to perform the step of generating key information based on a sensor value received from a sensor provided in a working machine,
the key information being used to transmit and receive information between the working machine and an external device provided outside the working machine.

22. The program according to claim 21, wherein
one of the external device and the working machine is a transmission-side apparatus that transmits the information, and the other is a reception-side apparatus that receives the information, and
the program causes the computer to further perform the steps of:
causing the transmission-side apparatus to encrypt the information with the key information identical to the key information stored in the reception-side apparatus; and
causing the reception-side apparatus to decrypt the encrypted information received from the transmission-side apparatus with the key information stored in the reception-side apparatus.

23. The program according to claim 21 or 22, wherein
one of the external device and the working machine is a transmission-side apparatus that transmits the information, and the other is a reception-side apparatus that receives the information, and
the program causes the computer to further perform the steps of:
causing the transmission-side apparatus to generate a first authentication code based on the key information identical to the key information stored in the reception-side apparatus and the information; and
causing the reception-side apparatus to receive the information and the first authentication code from the transmission-side apparatus, to generate a second authentication code based on the received information and the key information stored in the reception-side apparatus, and to compare the first authentication code with the second authentication code.

24. The program according to any one of claims 21 to 23, wherein
one of the external device and the working machine is a transmission-side apparatus that transmits the information, and the other is a reception-side apparatus that receives the information, and
the program causes the computer to further perform the steps of:
causing the transmission-side apparatus to combine the key information identical to the key information stored in the reception-side apparatus with the information; and
causing the reception-side apparatus to receive the combined key information and information from the transmission-side apparatus, and to compare the received key information with the key information that has been stored in the reception-side apparatus before the reception-side apparatus receives the key information.

25. The program according to any one of claims 21 to 24, wherein
the information is a control parameter for use in controlling an operation of the working machine, and
the program causes the computer to further perform the steps of:
causing the external device to transmit the control parameter to the working machine by using the key information; and
causing the working machine to determine, based on the key information, whether to control the operation of the working machine based on the control parameter.
